# EUROPÄISCHE PATENTSCHRIFT

(11) **EP 3 882 224 B1**
(45) Veröffentlichungstag und Bekanntmachung des Hinweises auf die Patenterteilung: **01.11.2023**
(21) Anmeldenummer: 21163377.1
(22) Anmeldetag: 18.03.2021
(51) Int. Cl.: C03C 17/00, C03C 17/30, C03C 17/32, C09D 151/08, C09D 163/00, C09D 183/04, C09D 183/08, C09D 183/14

(54) **BESCHICHTUNGSMATERIAL FÜR GLASSUBSTRATE, MIT DEM BESCHICHTUNGSMATERIAL BESCHICHTETES GLASSUBSTRAT SOWIE VERFAHREN ZU DEREN HERSTELLUNG**
COATING MATERIAL FOR GLASS SUBSTRATES, GLASS SUBSTRATE COATED WITH THE COATING MATERIAL AND METHOD FOR PRODUCING THE SAME
MATIÈRE DE REVÊTEMENT POUR SUPPORTS EN VERRE, SUBSTRAT EN VERRE REVÊTU DE LA MATIÈRE DE REVÊTEMENT, AINSI QUE SON PROCÉDÉ DE FABRICATION

(30) Priorität: 19.03.2020 DE 102020203552
(43) Veröffentlichungstag der Anmeldung: 22.09.2021
(73) Patentinhaber: Fraunhofer-Gesellschaft zur Förderung der angewandten Forschung e.V., 80686 München (DE)
(72) Erfinder: Rose, Klaus, 97082 Würzburg (DE); Deichman, Karl, 97082 Würzburg (DE)
(74) Vertreter: Pfenning, Meinig & Partner mbB

(56) Entgegenhaltungen:
- DE-A1-102011 056 693
- US-A1- 2016 200 921
- TATAR P ET AL: "Antibacterial Thin Films on Glass Substrate by Sol-Gel Process", JOURNAL OF INORGANIC AND ORGANOMETALLIC POLYMERS, KLUWER ACADEMIC PUBLISHERS-PLENUM PUBLISHERS, NE, Bd. 17, Nr. 3, 30. März 2007 (2007-03-30), Seiten 525-533, XP019504514, ISSN: 1574-1451, DOI: 10.1007/S10904-007-9142-3

## Beschreibung

Die vorliegende Erfindung betrifft ein Beschichtungsmaterial für Glassubstrate. Das Beschichtungsmaterial umfasst mindestens ein anorganisch-organisches Hybridpolymer, welches herstellbar ist durch Vernetzung mindestens einer vernetzbaren Vorstufe des mindestens einen anorganisch-organischen Hybridpolymers, wobei die mindestens eine vernetzbare Vorstufe des mindestens einen anorganisch-organischen Hybridpolymers herstellbar ist durch Reaktion mehrerer spezieller Komponenten.

Bei der Herstellung von Behälterglas, insbesondere von Glasflaschen treten in der Glasoberfläche immer wieder Mikrorisse auf, die die Bruchfestigkeit der Flasche reduzieren, was insbesondere bei Flaschen für CO₂-haltige Getränke zu vermeiden ist.

Die Festigkeit vom Glas hängt von der Unversehrtheit der Glasoberfläche ab. Unmittelbar nach Herstellung des Glases ist seine Festigkeit am höchsten. Die Festigkeit sinkt jedoch, wenn die Glasoberfläche Kratzer oder Schrammen aufweist. Es sind deshalb zahlreiche Verfahren bekannt, die Oberfläche von Gegenständen aus Glas gegen mechanische Beschädigungen zu schützen.

Zur Lösung dieses Problems wird direkt bei der Herstellung eine erste Schicht aufgetragen, die die vorhandenen Mikrorisse füllen und somit die Festigkeit der Glasflasche erhalten sollen. Dieses erste Beschichtungsverfahren, die sog. Heißendvergütung, beinhaltet das Aufbringen von gegebenenfalls in organischen Lösungsmitteln und/oder Wasser gelösten Metallverbindungen auf die auf 500 bis 600 °C heiße äußere Oberfläche der Hohlglaskörper, wobei die Metallverbindungen unter Ausbildung dünner Metalloxidschichten pyrolysieren. Als Ausgangsstoffe kommen dafür Metallhalogenide oder Metallorganylverbindungen zum Einsatz, z.B. Zinntetrachlorid, Titantetrachlorid, Dimethylzinndichlorid, Butylzinntrichlorid, Dibutylzinndiacetat. Diese pyrolysieren auf der heißen Glasoberfläche zum entsprechenden Oxid und setzen dabei Stoffe wie CO₂, HCl, organische Chlorverbindungen und Metallverbindungen als Reaktions- und Zersetzungsprodukte frei, weswegen es einer intensiven Abluftreinigung und verschiedener Arbeitsschutzmaßnahmen bedarf.

Neben der Rissfüllung zum Erhalt der Druckfestigkeit von Glasflaschen haben die Metalloxidschichten noch die weitere Funktion als Haftvermittler für die bei einer anschließenden Kaltendvergütung aufgebrachten Wachsschichten. Das Ziel der Kaltendvergütung ist es, eine mit der Behälteroberfläche verbundene organische Schicht zu schaffen, die im weiteren Gebrauch der Flasche (Befüllungs- und Waschstraßen, Etikettierung, Transport) eine unmittelbare Glas-Glas-Berührung verhindert und daher die Reibung vermindert und die Glasoberfläche von dem reibungsinduzierten Verschleiß schützt. Diese dünnen Filme sind in der Regel aus Naturwachs oder synthetischen Wachsen oder Polymeren, sind durchsichtig und werden in einem zweiten, der Heißendvergütung nachgeschalteten Beschichtungsprozess bei deutlich geringeren Temperaturen von ca. 90 bis 200 °C aufgebracht.

Insgesamt wird für den Erhalt der Festigkeit von Glasflaschen und für die reduzierte Verschleißanfälligkeit derzeit immer die Heißendvergütung in Kombination mit der Kaltendvergütung als Zweischichtsystem aufgebracht, wobei bei der Heißendvergütung auch noch umweltbedenkliche Komponenten eingesetzt und freigesetzt werden.

Zur Heißendvergütung ist in der DE 1 291 448 ein Verfahren zur Erhöhung der Ritzhärte und Festigkeit von Glasgegenständen, insbesondere Glasflaschen, durch Erzeugung eines dünnen, farblosen, durchsichtigen Überzuges auf den Außenflächen der Glasgegenstände beschrieben, dessen Merkmal darin besteht, dass auf die Glasgegenstände aufgebrachte dünne Schichten eines pyrolysierbaren anorganischen Salzes oder einer pyrolysierbaren organischen Verbindung des Titans, Zirkoniums, Zinns oder Vanadiums auf den Glasgegenständen bei Temperaturen zwischen 370 und 705 °C pyrolytisch zu den entsprechenden Metalloxiden zersetzt werden. Anschließend werden die Glasgegenstände auf Temperaturen zwischen 230 und 65,5 °C abgekühlt und auf die noch heißen Glasoberflächen wird als Kaltendvergütung ein Olefinpolymerisat, ein Polyurethan, ein Polystyrol oder ein Essigsäuresalz eines Alkylamins aufgesprüht. Beispiel eines Olefinpolymerisates ist ein Polyethylenwachs niedrigen Molekulargewichts, welches in Form einer wässrigen Emulsion verwendet wird. Als Emulgator dient das Alkalimetallsalz einer Fettsäure, insbesondere Kaliumoleat.

Dieses Verfahren kann derzeit als Standardverfahren in der gesamten Behälterglasindustrie angesehen werden.

Die Filme aus Polyethylenwachs sind jedoch nicht waschlaugenbeständig und werden bei einer Reinigung des Behälters nach verhältnismäßig kurzer Zeit durch die waschaktiven Substanzen der heißen Reinigungsschritte bei Mehrwegflaschen abgelöst.

Es werden deshalb viele Anstrengungen unternommen, die Kaltendvergütung zu verbessern und dauerhafter zu machen, beispielhaft seien hier genannt:
- Aus der DE 1 298 681 ist ein Verfahren zum Überziehen von Glasgegenständen mit einer verschleißfesten und gleitfähigen Schicht bekannt. Dieses Verfahren ist dadurch gekennzeichnet, dass auf die Oberfläche des Glasgegenstandes eine wässrige Lösung aus einem Umsetzungsprodukt von Polyvinylalkohol, einem emulgierten Polyolefin, vorzugsweise emulgierten Polyethylen, und einer sauren Verbindung aufgebracht wird.
- Die DE 1596 742 betrifft ein Verfahren zur Herstellung dauerhafter, glatter Überzüge auf Glaskörpern, bei dem der Überzug auf die auf 70 bis 225 °C erwärmten Glaskörper aus einer Mischung eines dispergierten Polyolefins und eines Polyoxyethylenderivates einer Fettsäure aufgebracht wird. Das disperse Polyolefin ist vorzugsweise Polyethylen. Als Polyoxyethylenderivat einer Fettsäure wird vorzugsweise Polyoxyethylenmonostearat verwendet.
- Aus der DE 2 432 478 ist ein Glasbehälter mit einem Überzug aus einem ionischen Copolymer zwischen einem α-Olefin und einer α,β-ethylenischen ungesättigen Carbonsäure bekannt.
- Aus der DE 1 495 137 ist ein Verfahren zur Herstellung von modifizierten Polyolefinwachsen bekannt.

Diese aus dem Stand der Technik bekannten Beschichtungsmaterialien sind jedoch noch nicht in der Lage, alle Anforderungen zu erfüllen, die an ein Überzugsmittel für Glasoberflächen zu stellen sind. Diese Überzüge sollten insbesondere folgende Forderungen erfüllen:
- Die Überzüge sollten die Glasoberfläche wirksam vor mechanischen Beschädigungen schützen, wie sie beispielsweise auftreten, wenn die Glasbehälter bei der Reinigung, Abfüllung oder Verpackung aneinander reiben oder mit Metallflächen der Reinigungs-, Abfüll- oder Verpackungsmaschinen in reibende Berührung kommen.
- Die Überzüge sollten eine größere Anzahl von Reinigungs-, und Waschvorgängen, z.B. in Spülmaschinen, überstehen. Die Überzüge sollten also insbesondere gegen den Angriff heißer, wässriger Waschlaugen beständig sein.
- Die Überzüge sollten optimaler Weise einen guten Gleitwert aufweisen, damit die behandelten Glasbehälter gut handhabbar sind.

- Die Überzüge sollten auf den Glasoberflächen möglichst gut haften, damit sie bei punktueller Beschädigung nicht ohne weiteres von der Glasoberfläche abgezogen werden können.
- Etiketten, insbesondere Etiketten mit selbstklebender Beschichtung, sollten auf den Überzügen der Beschichtung ausreichend fest haften, damit die Etikettierfähigkeit der behandelten Glasbehälter gewährleistet bleibt.

Die DE 10 2011 056693 A1 betrifft ein Formwerkzeug zum Aushärten von Elastomeren, insbesondere von Polyurethan-Polymeren, gekennzeichnet durch eine auf der Innenseite der Form aufgebrachte Beschichtung aus einem oder umfassend ein Kieselsäure(hetero)-polykondensat, in dem über Kohlenstoffatome an Siliciumatome gebundene Kohlenwasserstoffgruppen vorhanden sind.

Tatar P. et al. ("Antibacterial Thin Films on Glass Substrate by Sol-Gel Process", JOURNAL OF INORGANIC AND ORGANOMETALLIC POLYMERS, KLUWER ACADEMIC PUBLISHERS-PLENUM PUBLISHERS, NE, Bd. 17, Nr. 3, 30. März 2007 (2007-03-30), Seiten 525-533, XP019504514, ISSN: 1574-1451, DOI: 10.1007/S10904-007-9142-3) beschreibt antibakterielle transparente dünne Schichten, die unterschiedliche Mengen an Silberionen enthalten und durch das Sol-Gel-Verfahren auf einem Glassubstrat hergestellt wurden.

Die US 2016/200921 A1 betrifft eine wässrige Beschichtungszusammensetzung, die mindestens eine wässrige Dispersion oder Lösung (A) mindestens eines elektrophoretisch abscheidbaren Bindemittels und gegebenenfalls mindestens eines Vernetzungsmittels sowie mindestens eine wässrige Sol-Gel-Zusammensetzung (B) umfasst, um ein elektrisch leitfähiges Substrat zumindest teilweise mit einem Elektrobeschichtungsmaterial zu beschichten.

Ausgehend hiervon war es die Aufgabe der vorliegenden Erfindung ein Beschichtungsmaterial für Glassubstrate bereitzustellen, das eine vereinfachte Herstellung einer Beschichtung für Glassubstrate ermöglicht, die eine gute Haftung und Beständigkeit auf der Oberfläche des Glassubstrats aufweist und die Oberfläche des Substrats wirksam vor mechanischen Beschädigungen schützt.

Diese Aufgabe wird bezüglich eines Beschichtungsmaterials für Glassubstrate mit den Merkmalen des Patentanspruchs 1, bezüglich eines beschichteten Glassubstrats mit den Merkmalen des Patentanspruchs 10, bezüglich eines Verfahrens zur Herstellung eines Beschichtungsmaterials für Glassubstrate mit den Merkmalen des Patentanspruchs 12 und bezüglich eines Verfahrens zur Herstellung eines beschichteten Glassubstrats mit den Merkmalen des Patentanspruchs 14 gelöst. Die jeweilig abhängigen Patentansprüche stellen dabei vorteilhafte Weiterbildungen dar.

Erfindungsgemäß wird somit ein Beschichtungsmaterial für Glassubstrate angegeben, welches mindestens ein anorganisch-organisches Hybridpolymer umfasst oder daraus besteht. Das mindestens eine anorganisch-organische Hybridpolymer ist herstellbar durch Vernetzung mindestens einer vernetzbaren Vorstufe des mindestens einen anorganisch-organischen Hybridpolymers, wobei die mindestens eine vernetzbare Vorstufe des mindestens einen anorganisch-organischen Hybridpolymers herstellbar ist durch Reaktion mehrerer Komponenten. Diese mehreren Komponenten bestehen aus mindestens einer Komponente A, mindestens einer Komponente B, mindestens einer Komponente C und mindestens einem Epoxypolymer.

Bei Komponente A handelt es sich um eine Metallalkoholat- und/oder Silicat-Komponente. Die mindestens eine Komponente A ist ausgewählt aus der Gruppe bestehend aus Metallalkoholaten und Mischungen hiervon.

Die Metallalkoholate können peralkoxyliert sein oder können mindestens einen ein- oder zweizähnigen, bevorzugt mindestens einen zweizähnigen, Liganden aufweisen. Vorzugsweise sind die die Metallalkoholate peralkoxyliert oder weisen mindestens einen ein- oder zweizähnigen, besonders bevorzugt mindestens einen zweizähnigen, Liganden auf.

Bei Komponente B handelt es sich um eine Silan- und/oder Siloxan-Komponente mit einer oder mehreren speziellen funktionellen organischen Gruppen. Die mindestens eine Komponente B ist ausgewählt aus Verbindungen gemäß der folgenden Formeln (B-I) bis (B-V) 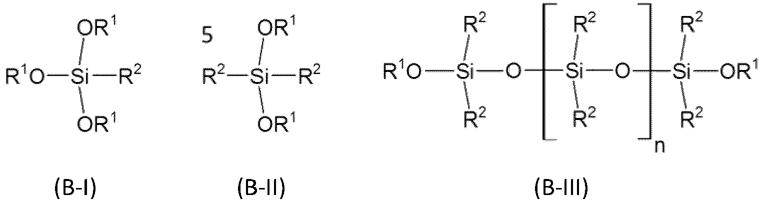 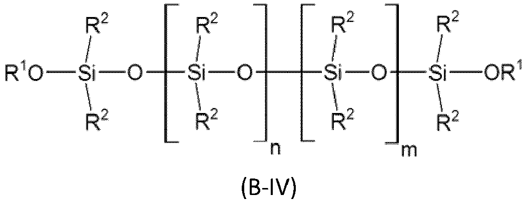 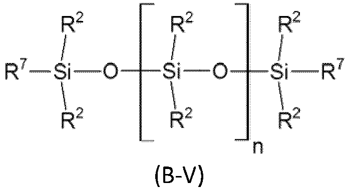 und Mischungen aus diesen Verbindungen, wobei
- R¹: bei jedem Auftreten gleich oder verschieden ist und ausgewählt ist aus der Gruppe bestehend aus Wasserstoff, Methyl, Ethyl, *n*-Propyl, *iso-*Propyl, *n*-Butyl, *iso*-Butyl, *sec*-Butyl und *tert*-Butyl,
- R²: bei jedem Auftreten gleich oder verschieden ist und ein Rest ist, der ausgewählt ist aus der Gruppe bestehend aus Alkyl-Resten, welche einfach, mehrfach, vollständig oder nicht halogeniert, vorzugsweise fluoriert, sein können, Aryl-Resten, welche einfach, mehrfach, vollständig oder halogeniert, vorzugsweise fluoriert, sein können, Arylalkyl-Resten, welche einfach, mehrfach, vollständig oder nicht halogeniert, vorzugsweise fluoriert, sein können, Alkylaryl-Resten, welche einfach, mehrfach, vollständig oder nicht halogeniert, vorzugsweise fluoriert, sein können, Aminoalkyl-Resten und Mercaptoalkyl-Resten, wobei mindestens eine Kohlenstoffkette des Restes in allen Fällen (d.h. im Falle von Alkyl, im Falle von Aryl, im Falle von Arylalkyl, im Falle von Alkylaryl, im Falle von Aminoalkyl und im Falle von Mercaptoalkyl) an einer oder mehreren Stellen durch eine oder mehrere Gruppierungen unterbrochen sein kann, die ausgewählt sind aus der Gruppe bestehend aus O, S, NR¹, NR¹₂⁺Cl⁻, NR¹₂⁺CH₃COO⁻, C(O), C(O)O, C(O)OC(O), C(O)NR¹, NR¹C(O), NR¹C(O)NR¹ und Kombinationen hiervon,
- R⁷: bei jedem Auftreten gleich oder verschieden ist und ein Trialkoxysilylalkyl-Rest, vorzugsweise ein Triethoxysilylalkyl-Rest, ist, welcher an einer oder mehreren Stellen durch eine oder mehrere Gruppierungen unterbrochen sein kann, die ausgewählt sind aus der Gruppe bestehend aus NR¹, C(O), C(O)NR¹, NR¹C(O), NR¹C(O)NR¹ und Kombinationen hiervon,
- m: eine Zahl von 0 bis 25, vorzugsweise eine Zahl von 1 bis 25, ist und
- n: eine Zahl von 0 bis 25, vorzugsweise eine Zahl von 1 bis 25, ist.

Die mindestens eine Komponente B kann aus einer oder aus mehreren Verbindungen gemäß der Formeln (B-I) bis (B-V) bestehen.

Bei Komponente C handelt es sich um eine Silan-Komponente mit einer oder mehreren speziellen reaktiven organischen Gruppen. Die mindestens eine Komponente C ist ausgewählt aus Verbindungen gemäß der folgenden Formeln (C-I) bis (C-III) 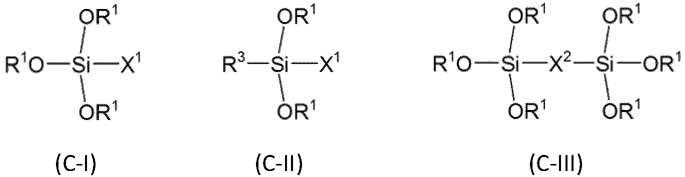 und Mischungen aus diesen Verbindungen, wobei
- R¹: bei jedem Auftreten gleich oder verschieden ist und ausgewählt ist aus der Gruppe bestehend aus Wasserstoff, Methyl, Ethyl, *n*-Propyl, *iso-*Propyl, *n*-Butyl, *iso*-Butyl, *sec*-Butyl und *tert*-Butyl,
- R³: ausgewählt ist aus der Gruppe bestehend aus Methyl, Ethyl, *n*-Propyl, *iso*-Propyl, *n*-Butyl, *iso*-Butyl, *sec*-Butyl und *tert*-Butyl,
- X¹: bei jedem Auftreten gleich oder verschieden ist und ein Rest ist, der mindestens eine C=C-Doppelbindung und/oder mindestens eine Epoxid-Gruppe aufweist, und
- X²: eine verbrückende Gruppierung ist, die mindestens eine C=C-Doppelbindung und/oder mindestens eine Epoxid-Gruppe aufweist.

Die mindestens eine Komponente C kann aus einer oder aus mehreren Verbindungen gemäß der Formeln (C-I) bis (C-III) bestehen.

Das erfindungsgemäße Beschichtungsmaterial umfasst ein spezielles anorganisch-organisches Hybridpolymer oder besteht aus diesem. Anorganisch-organische Hybridpolymere, sogenannte Hetero-poly(organo)-siloxane, die z.B. aus Organo(alkoxy)silanen, Haupt- oder Nebengruppen-Metallalkoxiden und weiteren Komponenten über den Sol-Gel-Prozess (Hydrolyse und Polykondensation von Metallalkoxiden) hergestellt werden können, sind zu wichtigen Produkten in der Beschichtungstechnologie geworden. Anorganisch-organische Hybridpolymere sind auch bekannt unter dem Namen ORMOCER^{®}e. Die attraktiven Merkmale dieser Verbundwerkstoffe sind im Idealfall hohe Transparenz (glasartig), Verarbeitbarkeit bei gemäßigten Temperaturen oder durch UV-Bestrahlung (polymerartig), gute thermische Stabilität und niedrige Oberflächenenergie (siliconartig) sowie breite Verfügbarkeit der Ausgangsverbindungen. Im Bereich der Oberflächenfunktionalisierung von Metallen sind dünne Schichten mit guter Haftung gefragt, die weitere Eigenschaften wie z.B. hohe Härte und Abriebbeständigkeit aufweisen. Derartige multifunktionelle Schichten lassen sich ausgehend von funktionellen Bausteinen in Mehrkomponentensystemen über kolloidale Zwischenstufen gewinnen.

Das im Beschichtungsmaterial enthaltene spezielle anorganisch-organische Hybridpolymer kann mittels Vernetzung aus einer vernetzbaren Vorstufe hergestellt werden. Hierfür weist die vernetzbare Vorstufe vernetzbare Gruppen auf, bei denen es sich beispielsweise um Acrylat-Gruppen, Methacrylat-Gruppen und/oder Epoxy-Gruppen handeln kann. Die Vernetzung kann beispielsweise mittels Polymerisation erfolgen. Die vernetzbare Vorstufe ist herstellbar durch Reaktion mehrerer Komponenten, welche aus der mindestens einen Komponente A, der mindestens einen Komponente B, der mindestens einen Komponente C und mindestens einem Epoxypolymer bestehen. Vorzugsweise ist die mindestens eine vernetzbare Vorstufe herstellbar durch einen Sol-Gel-Prozess. Beispielsweise können die Komponenten A, B und C mittels Sol-Gel-Prozess zu einer vernetzbaren Vorstufe umgesetzt werden, die ein Siloxan-Netzwerk - gegebenenfalls mit eingebauten Metalloxid-Komponenten - umfasst, wobei anschließend durch eine Vernetzung vernetzbarer Gruppen der vernetzbaren Vorstufe das anorganisch-organische Hybridpolymer aus der vernetzbaren Vorstufe hergestellt werden kann.

Aufgrund des Siloxan-Grundcharakters bzw. des silicatischen Grundcharakters der speziellen Komponenten A, B und C sind diese Materialien besonders gut geeignet für eine Beschichtungsanwendung auf Glasoberflächen, da eine gute Anhaftung bzw. sogar eine reaktive Anbindung an die Glasoberfläche gegeben ist. Die anorganische und teilweise keramische mindestens eine Komponente A bewirkt zudem eine hohe Festigkeit und Kratzfestigkeit der Beschichtung, sodass eine das Beschichtungsmaterial umfassende Beschichtung eine gute Beständigkeit auf der Oberfläche des Glassubstrats aufweist. Die funktionellen organischen Gruppen R² der mindestens einen Komponente B sind auch noch anorganisch-organischen Hybridpolymer vorhanden und führen letztlich zu weiteren verbesserten Eigenschaften der das Beschichtungsmaterial enthaltenden Beschichtung wie z.B. einer besseren Gleitreibung und besseren Anhaftung von Etiketten auf der Beschichtung. Die Reste X¹ und/oder X² der mindestens einen Komponente C umfassen vernetzende bzw. reaktive Gruppen, die die Vernetzung der vernetzenden Vorstufe zum anorganisch-organischen Hybridpolymer ermöglichen. Somit tragen diese reaktiven Gruppen wesentlich zur Schichthärtung bei, die auch bei niedrigen Temperaturen, z.B. thermisch bis max. 160 °C, oder unter UV-Bestrahlung erfolgen kann.

Aufgrund der Verwendung der speziellen Komponenten A, B und C weist eine das erfindungsgemäße Beschichtungsmaterial umfassende Beschichtung somit diverse Vorteile auf. So zeichnet sich eine entsprechende Beschichtung durch eine gute Haftung auf Glas und eine festigkeitserhaltende oder steigernde Wirkung mit hoher Innendruckfestigkeit für Glasflaschen aus. Zudem führt eine entsprechende Beschichtung zu einer hohen Kratzfestigkeit des beschichteten Glases, wodurch z.B. Gebrauchsspuren nach mehrmaligen Füllungs- und Reinigungsvorgängen von Glasflaschen vermieden werden können. Weiterhin ermöglicht das erfindungsgemäße Beschichtungsmaterial aufgrund der speziellen Komponenten A, B und C eine umweltfreundliche Verarbeitung ohne Verwendung und Freisetzung schädlicher Stoffe beim Beschichtungsvorgang. Ferner kann das erfindungsgemäße Beschichtungsmaterial zur Herstellung einer Beschichtung in Form eines Einschichtsystems verwendet werden, das sowohl die übliche Heißendvergütung als auch die übliche Kaltendvergütung ersetzt, sodass ein Beschichtungsvorgang eingespart werden kann. Mit dem erfindungsgemäßen Beschichtungsmaterial kann daher auf vereinfachte Weise eine Beschichtung in Form eines Einschichtsystems auf Glassubstraten erhalten werden, die zudem verbesserte Eigenschaften gegenüber den üblicherweise verwendeten (durch Heißendvergütung und Kaltendvergütung) erhaltenen Zweischichtsystem-Beschichtungen aufweisen.

Das erfindungsgemäße Beschichtungsmaterial ermöglicht somit eine vereinfachte Herstellung einer Beschichtung für Glassubstrate, die eine gute Haftung und Beständigkeit auf der Oberfläche des Glassubstrats aufweist und die Oberfläche des Substrats wirksam vor mechanischen Beschädigungen schützt.

Eine bevorzugte Ausführungsform des erfindungsgemäßen Beschichtungsmaterials zeichnet sich dadurch aus, dass die mindestens eine Komponente B und/oder die mindestens eine Komponente C mindestens eine an Si gebundene Hydroxylgruppe bzw. OH-Gruppe aufweist. Die freien Hydroxylgruppen bzw. OH-Gruppen ermöglichen eine reaktive Anbindung der das Beschichtungsmaterial enthaltenden Beschichtung an die Oberfläche des Glassubstrats, sodass eine noch bessere Anhaftung der Beschichtung auf dem Glassubstrat erreicht wird.

Eine weitere bevorzugte Ausführungsform des erfindungsgemäßen Beschichtungsmaterials ist dadurch gekennzeichnet, dass die Metallalkoholate der Komponente A ausgewählt sind aus Metallalkoholaten gemäß einer der folgenden Formeln (A-I) bis (A-IV) 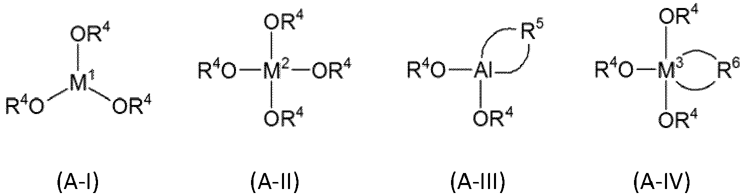 wobei
- M¹: ausgewählt ist aus der Gruppe bestehend aus dreiwertigen Hauptgruppenelementen und dreiwertigen Übergangsmetallen, wobei M¹ vorzugsweise Al ist,
- M²: ausgewählt ist aus der Gruppe bestehend aus Ti und Zr,
- M³: ausgewählt ist aus der Gruppe bestehend aus Al, Ti und Zr,
- R⁴: bei jedem Auftreten gleich oder verschieden ist und ausgewählt ist aus der Gruppe bestehend aus Methyl, Ethyl, *n*-Propyl, *iso*-Propyl, *n*-Butyl, *iso*-Butyl, *sec*-Butyl und *tert*-Butyl,
- R⁵: ein Chelatligand ist, der über zwei O-Atome an Al gebunden ist, wobei der Chelatligand vorzugsweise Acetylaceton oder Acetessigsäureethylester ist,
- R⁶: eine organische Säure mit mindestens einer Carboxylgruppe ist, welche über beide O-Atome einer ihrer Carboxylgruppen an M³ gebunden ist, wobei die organische Säure vorzugsweise ausgewählt ist aus der Gruppe bestehend aus Essigsäure, Propionsäure, Methacrylsäure, Acrylsäure, Benzoesäure und Milchsäure.

Die Verwendung solch spezieller Metallalkoholate führt zu einer noch höheren Festigkeit und Kratzfestigkeit der das Beschichtungsmaterial enthaltenen Beschichtungen.

Gemäß einer weiteren bevorzugten Ausführungsform des erfindungsgemäßen Beschichtungsmaterials ist die mindestens eine C=C-Doppelbindung des Restes X¹ und/oder die mindestens eine C=C-Doppelbindung des Restes X² Bestandteil einer Acrylat- oder Methacrylat-Gruppe ist. Dies bedeutet, dass in dieser bevorzugten Variante X¹ bei jedem Auftreten gleich oder verschieden ist und ein Rest ist, der mindestens eine Acrylat-Gruppe und/oder mindestens eine Methacrylat-Gruppe und/oder mindestens eine Epoxid-Gruppe aufweist, und X² eine verbrückende Gruppierung ist, die mindestens eine Acrylat-Gruppe und/oder mindestens eine Methacrylat-Gruppe und/oder mindestens eine Epoxid-Gruppe aufweist.

Über Acrylat-, Methacrylat- und Epoxid-Gruppen kann eine besonders einfache Vernetzung erreicht werden, sodass das anorganisch-organische Hybridpolymer auf besonders einfache Weise aus der vernetzbaren Vorstufe herstellbar ist. In der Folge ist die erfindungsgemäße Beschichtung einfacher herzustellen.

Erfindungsgemäß ist die mindestens eine vernetzbare Vorstufe des mindestens einen anorganisch-organischen Hybridpolymers herstellbar durch Reaktion mehrerer Komponenten bestehend aus mindestens einer Komponente A, mindestens einer Komponente B, mindestens einer Komponente C und mindestens einem Epoxypolymer.

Erfindungsgemäß bestehen die mehreren Komponenten aus der mindestens einen Komponente A, der mindestens einen Komponente B, der mindestens einen Komponente C und mindestens einem Epoxypolymer bestehen. Dies bedeutet, dass die mehreren Komponenten neben der mindestens einen Komponente A, der mindestens einen Komponente B, der mindestens einen Komponente C und mindestens einem Epoxypolymer keine weiteren Komponenten umfassen.

Gemäß einer weiteren bevorzugten Ausführungsform des erfindungsgemäßen Beschichtungsmaterials ist die mindestens eine Komponente A ausgewählt aus den folgenden Verbindungen A4 bis A8 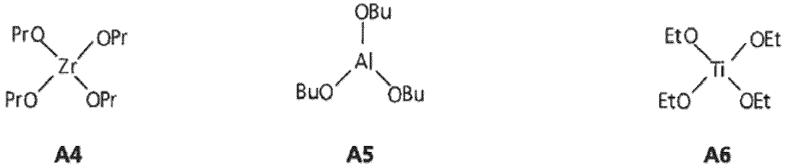 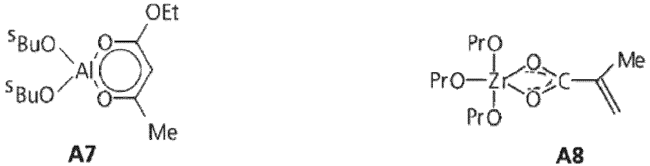 und Mischungen aus diesen Verbindungen.

Der Rest ^{S}Bu bedeutet hierbei sec-Bu (d.h. *sec*-Butyl).

Die Verwendung solch spezieller Metallalkoholate führt zu einer noch höheren Festigkeit und Kratzfestigkeit der das Beschichtungsmaterial enthaltenen Beschichtungen.

Besonders bevorzugt handelt es sich bei der mindestens einen Komponente A um die Verbindung A7. Mit dieser kann eine besonders hohe Festigkeit und Kratzfestigkeit der das Beschichtungsmaterial enthaltenen Beschichtungen erreicht werden.

Eine weitere bevorzugte Ausführungsform des erfindungsgemäßen Beschichtungsmaterials ist dadurch gekennzeichnet, dass die mindestens eine Komponente B ausgewählt ist aus den folgenden Verbindungen B1 bis B19 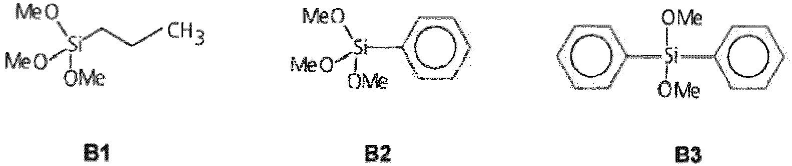 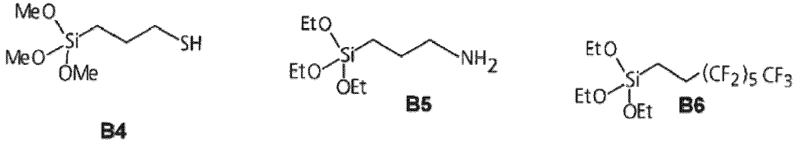 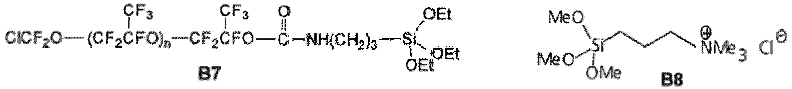 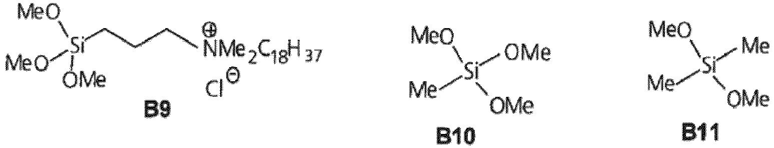 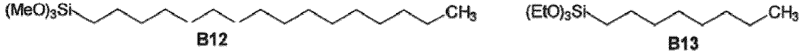 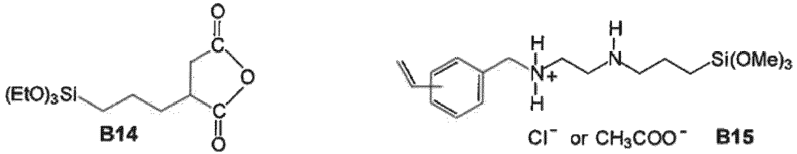 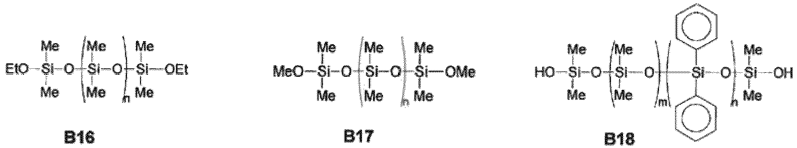 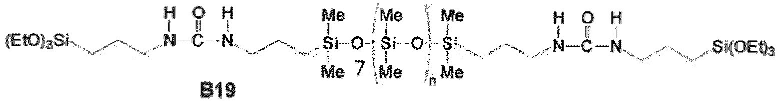 und Mischungen aus diesen Verbindungen. Die Variable n ist eine Zahl von 0 bis 25, vorzugsweise von 1 bis 25.

Die Verwendung solch spezieller Verbindungen führt zu noch zu besseren Eigenschaften der das Beschichtungsmaterial enthaltenen Beschichtungen, wie z.B. zu einer noch besseren Gleitreibung und einer noch besseren Anhaftung von Etiketten.

Besonders bevorzugt ist die mindestens einen Komponente B ausgewählt aus der Gruppe bestehend aus Verbindung B2, Verbindung B5, Verbindung B6 und Mischungen hiervon. Ganz besonders bevorzugt ist mindestens eine Komponente B eine Mischung aus Verbindung B2 und Verbindung B5 oder eine Mischung aus Verbindung B2, Verbindung B5 und Verbindung B6. Mit diesen speziellen Verbindung bzw. Mischungen aus Verbindungen kann ein Beschichtung mit besonders vorteilhaften Eigenschaften, z.B. mit einer besonders guten Gleitreibung und einer besonders hohen Anhaftung von Etiketten, erhalten werden.

Gemäß einer weiteren bevorzugten Ausführungsform des erfindungsgemäßen Beschichtungsmaterials ist die mindestens eine Komponente C ausgewählt aus den folgenden Verbindungen C1 bis C20 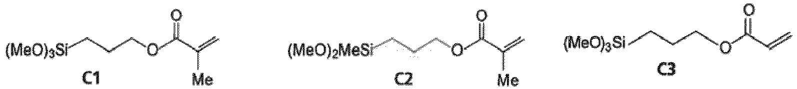 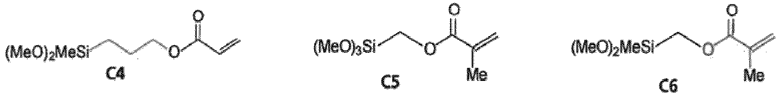 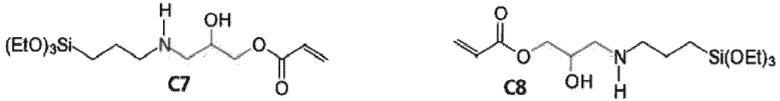 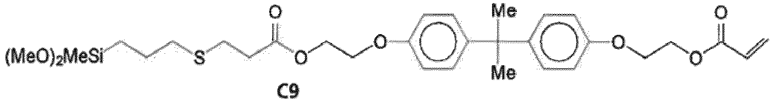 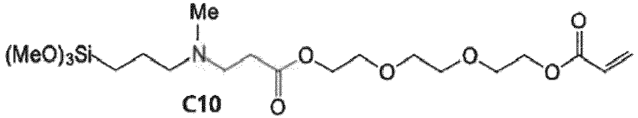 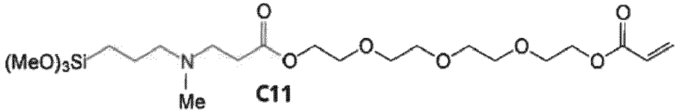 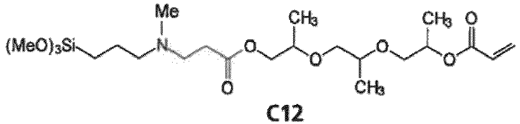 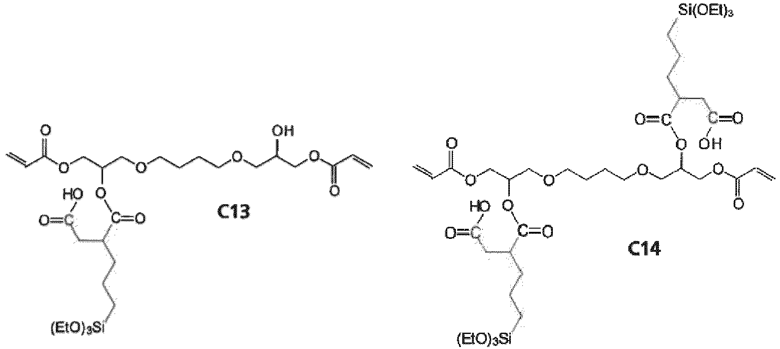 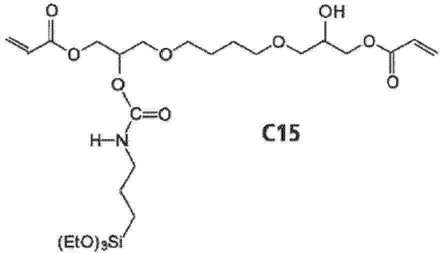 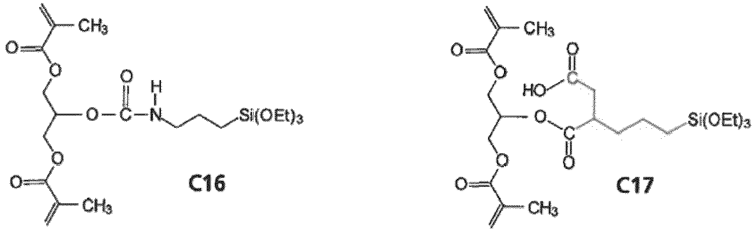 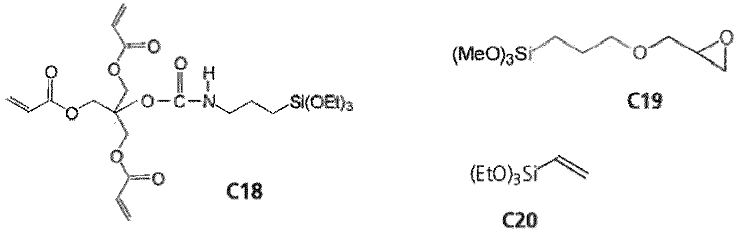 und Mischungen aus diesen Verbindungen.

Die Verwendung solch spezieller Verbindungen führen zu einer noch besseren Schichthärtung der das Beschichtungsmaterial enthaltenen Beschichtungen.

Besonders bevorzugt handelt es sich bei der mindestens einen Komponente C um die Verbindung C19. Mit dieser Verbindung kann eine besonders gut Schichthärtung der das Beschichtungsmaterial enthaltenen Beschichtungen erreicht werden.

Eine ganz besonders bevorzugte Ausführungsform des erfindungsgemäßen Beschichtungsmaterials zeichnet sich dadurch aus, dass die mehreren Komponenten aus den folgenden Komponenten A7, B2, B5 und C19, 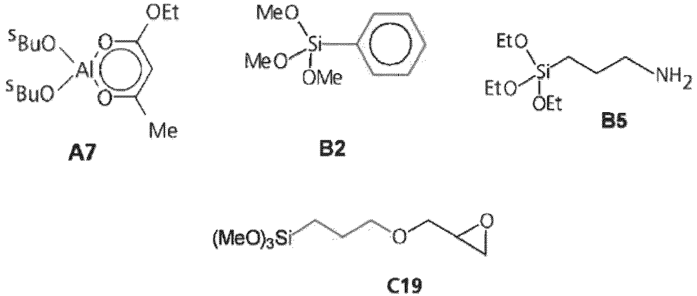 sowie einem Epoxypolymer und optional der folgenden Komponente B6 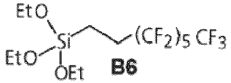 bestehen. Durch Verwendung dieser Kombination an speziellen Verbindungen wird ein Beschichtungsmaterial erhalten aus dem eine Beschichtung mit ganz besonders vorteilhaften Eigenschaften erhalten wird. So weist eine solche Beschichtung beispielsweise eine besonders hohe Haftung und Beständigkeit auf Glasoberflächen auf und ist z.B. aufgrund einer sehr hohen Festigkeit und Kratzfestigkeit besonders gut vor mechanischen Beschädigungen geschützt. Zudem weist die Beschichtung eine besonders gute Gleitreibung und Anhaftung von Etiketten auf. Ferner kann eine besonders gute Schichterhärtung erreicht werden.

Weiterhin ist es bevorzugt, dass die Reaktion, durch welche die vernetzbare Vorstufe herstellbar ist, ein Sol-Gel-Prozess ist. Über einen Sol-Gel-Prozess ist die vernetzbare Vorstufe des anorganisch-organischen Hybridpolymers besonders einfach herstellbar, sodass das erfindungsgemäße Beschichtungsmaterial insgesamt einfacher herstellbar ist.

Die vorliegende Erfindung betrifft zudem ein beschichtetes Glassubstrat, umfassend ein Glassubstrat, welches mit einem erfindungsgemäßen Beschichtungsmaterial beschichtet ist.

Vorzugweise ist das Glassubstrat ausgewählt aus der Gruppe bestehend aus Behälterglas, Glasdisplays, Fensterglas und optischen Gläsern, z.B. (optischen) Linsen).

Eine bevorzugte Ausführungsform des erfindungsgemäßen beschichteten Glassubstrats ist dadurch gekennzeichnet, dass es sich bei dem Glassubstrat um Behälterglas, vorzugsweise um eine Glasflasche, handelt. Bei der Glasflasche kann es sich beispielsweise um eine Glasflasche für Einweg- und/oder Mehrweggebrauch handeln. Für Behälterglas und insbesondere für Glasflaschen sind das erfindungsgemäße Beschichtungsmaterial enthaltende Beschichtungen besonders gut geeignet, da hier die Vorteile des Beschichtungsmaterials und der Beschichtung besonders zum Tragen kommen. Aufgrund der erhöhten Festigkeit von Glasflaschen, die eine das erfindungsgemäße Beschichtungsmaterial enthaltende Beschichtung aufweisen, kann die Wandstärke dieser Glasflaschen reduziert werden. Die damit einhergehende Gewichtsreduzierung ist ein wichtiger Faktor für die nachhaltige Produktion bei der Flaschenherstellung unter gleichzeitiger Substitution von Kunststoffflaschen.

Vorzugsweise ist das Behälterglas ausgewählt aus der Gruppe bestehend aus Glasflaschen, Trinkgläsern, Glasampullen und medizinischen Glasbehältern.

Alternativ kann es sich bei dem Glassubstrat auch ein Glasdisplay, z.B. ein Glasdisplay eines Smartphones oder Tablets, handeln. Beim zunehmenden Einsatz von Smartphones und Tablets mit Glasdisplays und der damit verbundenen angestrebten Gewichtsreduzierung ist die Anwendung der festigkeitserhaltenden oder -steigernden Beschichtungen auf Displayglas ebenfalls möglich.

Ferner betrifft die vorliegende Erfindung auch ein Verfahren zur Herstellung eines erfindungsgemäßen Beschichtungsmaterials für Glassubstrate bei welchem
a) mindestens eine vernetzbare Vorstufe mindestens eines anorganisch-organischen Hybridpolymers hergestellt wird, indem eine Mischung bestehend aus mindestens einer Komponente A, mindestens einer Komponente B, mindestens einer Komponente C und mindestens einem Epoxypolymer einem Sol-Gel-Prozess unterzogen wird,
   und
b) die vernetzbare Vorstufe zum mindestens einen anorganisch-organischen Hybridpolymer vernetzt wird.

Die mindestens eine Komponente A ist ausgewählt aus der Gruppe bestehend aus Metallalkoholaten, die peralkoxyliert sein können oder mindestens einen ein- oder zweizähnigen Liganden aufweisen können, und Mischungen hiervon.

Die mindestens eine Komponente B ist ausgewählt aus Verbindungen gemäß der folgenden Formeln (B-I) bis (B-V) 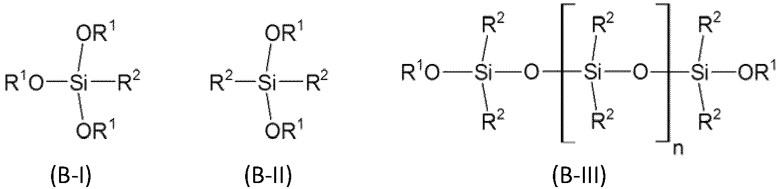 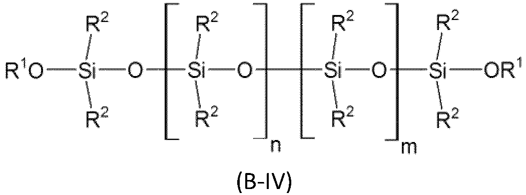 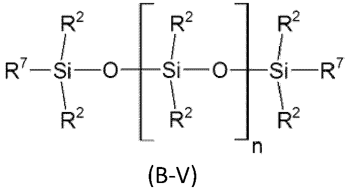 und Mischungen aus diesen Verbindungen, wobei
- R¹: bei jedem Auftreten gleich oder verschieden ist und ausgewählt ist aus der Gruppe bestehend aus Wasserstoff, Methyl, Ethyl, *n*-Propyl, *iso-*Propyl, *n*-Butyl, *iso*-Butyl, *sec*-Butyl und *tert*-Butyl,
- R²: bei jedem Auftreten gleich oder verschieden ist und ein Rest ist, der ausgewählt ist aus der Gruppe bestehend aus Alkyl-Resten, welche einfach, mehrfach, vollständig oder nicht halogeniert, vorzugsweise fluoriert, sein können, Aryl-Resten, welche einfach, mehrfach, vollständig oder halogeniert, vorzugsweise fluoriert, sein können, Arylalkyl-Resten, welche einfach, mehrfach, vollständig oder nicht halogeniert, vorzugsweise fluoriert, sein können, Alkylaryl-Resten, welche einfach, mehrfach, vollständig oder nicht halogeniert, vorzugsweise fluoriert, sein können, Aminoalkyl-Resten und Mercaptoalkyl-Resten, wobei mindestens eine Kohlenstoffkette des Restes in allen Fällen (d.h. im Falle von Alkyl, im Falle von Aryl, im Falle von Arylalkyl, im Falle von Alkylaryl, im Falle von Aminoalkyl und im Falle von Mercaptoalkyl) an einer oder mehreren Stellen durch eine oder mehrere Gruppierungen unterbrochen sein kann, die ausgewählt sind aus der Gruppe bestehend aus O, S, NR¹, NR¹₂⁺Cl⁻, NR¹₂⁺CH₃COO⁻, C(O), C(O)O, C(O)OC(O), C(O)NR¹, NR¹C(O), NR¹C(O)NR¹ und Kombinationen hiervon,
- R⁷: bei jedem Auftreten gleich oder verschieden ist und ein Trialkoxysilylalkyl-Rest, vorzugsweise ein Triethoxysilylalkyl-Rest, ist, welcher an einer oder mehreren Stellen durch eine oder mehrere Gruppierungen unterbrochen sein kann, die ausgewählt sind aus der Gruppe bestehend aus NR¹, C(O), C(O)NR¹, NR¹C(O), NR¹C(O)NR¹ und Kombinationen hiervon,
- m: eine Zahl von 0 bis 25 ist, und
- n: eine Zahl von 0 bis 25 ist.

Die mindestens eine Komponente B kann aus einer oder aus mehreren Verbindungen gemäß der Formeln (B-I) bis (B-V) bestehen.

Bei Komponente C handelt es sich um eine Silan-Komponente mit einer oder mehreren speziellen reaktiven organischen Gruppen. Die mindestens eine Komponente C ist ausgewählt aus Verbindungen gemäß der folgenden Formeln (C-I) bis (C-III) 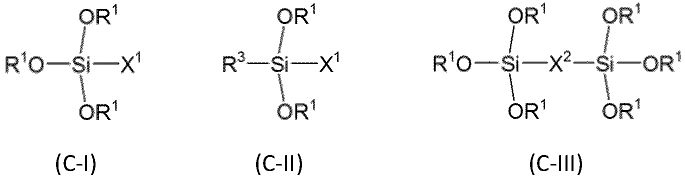 und Mischungen aus diesen Verbindungen, wobei
- R¹: bei jedem Auftreten gleich oder verschieden ist und ausgewählt ist aus der Gruppe bestehend aus Wasserstoff, Methyl, Ethyl, *n*-Propyl, *iso-*Propyl, *n*-Butyl, *iso*-Butyl, *sec*-Butyl und *tert*-Butyl,
- R³: ausgewählt ist aus der Gruppe bestehend aus Methyl, Ethyl, *n*-Propyl, *iso*-Propyl, *n*-Butyl, *iso*-Butyl, *sec*-Butyl und *tert*-Butyl,
- X¹: bei jedem Auftreten gleich oder verschieden ist und ein Rest ist, der mindestens eine C=C-Doppelbindung und/oder mindestens eine Epoxid-Gruppe aufweist, und
- X²: eine verbrückende Gruppierung ist, die mindestens eine C=C-Doppelbindung und/oder mindestens eine Epoxid-Gruppe aufweist.

Die mindestens eine Komponente C kann aus einer oder aus mehreren Verbindungen gemäß der Formeln (C-I) bis (C-III) bestehen.

Eine bevorzugte Variante des erfindungsgemäßen Verfahrens ist dadurch gekennzeichnet, dass die Vernetzung der mindestens einen vernetzbaren Vorstufe zum mindestens einen anorganisch-organischen Hybridpolymer in Schritt b)
- durch Wärmebehandlung, vorzugsweise bei einer Temperatur im Bereich von 20 °C bis 160 °C, und/oder
- durch Bestrahlung mit elektromagnetischer Strahlung mit einer Wellenlänge im Bereich von 1 nm bis 1 mm, vorzugsweise durch UV-Bestrahlung,
erfolgt. Auf diese Weise ist eine besonders einfache und effiziente Vernetzung der vernetzbaren Vorstufe möglich.

Die für das erfindungsgemäße Beschichtungsmaterial beschriebenen bevorzugten Ausführungsformen stellen auch bevorzugte Ausführungsvarianten des erfindungsgemäßen Verfahrens zur Herstellung des erfindungsgemäßen Beschichtungsmaterials dar.

Die vorliegende Erfindung betrifft zudem auch ein Verfahren zur Herstellung eines erfindungsgemäßen beschichteten Glassubstrats, wobei das Verfahren die Schritte a) und b) des erfindungsgemäßen Verfahrens zur Herstellung des erfindungsgemäße Beschichtungsmaterials umfasst, und wobei nach Schritt a) ein Glassubstrat mit der mindestens einen vernetzbaren Vorstufe oder dem Beschichtungsmaterial beschichtet wird. Vorzugsweise erfolgt die Beschichtung dabei vor Schritt b).

Es ist besonders bevorzugt, dass zunächst mindestens eine vernetzbare Vorstufe mindestens eines anorganisch-organischen Hybridpolymers hergestellt wird, indem eine Mischung bestehend aus der mindestens einen Komponente A, der mindestens einen Komponente B, der mindestens einen Komponente C und mindestens einem Epoxypolymer einem Sol-Gel-Prozess unterzogen wird, anschließend ein Glassubstrat mit der mindestens einen vernetzbaren Vorstufe beschichtet wird, und danach die vernetzbare Vorstufe zum mindestens einen anorganisch-organischen Hybridpolymer vernetzt wird.

Eine weitere bevorzugte Variante des erfindungsgemäßen Verfahrens zeichnet sich dadurch aus, dass die Beschichtung mit einem Verfahren erfolgt, welches ausgewählt ist aus der Gruppe bestehend aus Sprühverfahren, Tauchen, Fluten, Aufrakeln, Walzenauftrag, Rotationsbeschichtung und Kombinationen hiervon. Besonders bevorzugt erfolgt die Beschichtung mit einem Sprühverfahren. Auf diese Weise kann eine besonders einfache Beschichtung erreicht werden.

Die für das erfindungsgemäße Beschichtungsmaterial und das erfindungsgemäße beschichtete Glassubstrat beschriebenen bevorzugten Ausführungsformen stellen auch bevorzugte Ausführungsvarianten des erfindungsgemäßen Verfahrens zur Herstellung des erfindungsgemäßen beschichteten Glassubstrats dar.

Anhand der nachfolgenden Figuren und Beispiele soll die vorliegende Erfindung näher erläutert werden, ohne diese auf die hier gezeigten spezifischen Ausführungsformen und Parameter zu beschränken.

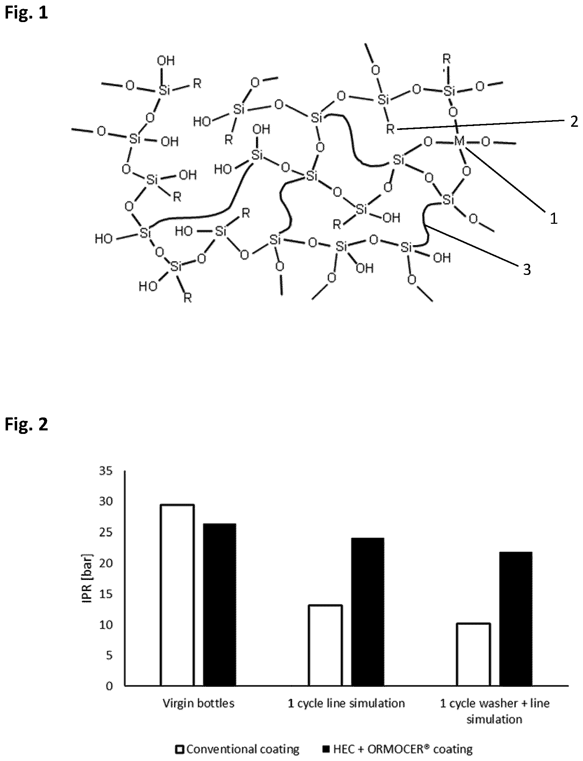

Fig. 1 zeigt einen Strukturformelausschnitt eines beispielhaften anorganisch-organischen Hybridpolymers, wie es im erfindungsgemäßen Beschichtungsmaterial enthalten sein kann. Das beispielhafte anorganisch-organische Hybridpolymer umfasst ein Siloxan-Netzwerk mit eingebauten Metallatomen 1 bzw. Metalloxidkomponenten, wobei es sich bei dem Metall z.B. um Ti, Al und/oder Zr handeln kann. Das anorganische Hybridpolymer umfasst ferner Siloxan-gebundene funktionelle organische Gruppen 2, die den Resten R² entsprechen (in Fig. 1 als R dargestellt), sowie organische Quervernetzungen 3 aus Polymerkomponenten, die aus einer Vernetzung der reaktiven Gruppen X¹ und/oder X² resultieren.

### Ausführungsbeispiel

Unterschiedliche Beschichtungen (zunächst nur thermisch härtende) aus einem beispielhaften Beschichtungsmaterial gemäß der vorliegenden Erfindung wurden hergestellt und im Sprühverfahren auf Flaschen aufgebracht.

Die beschichteten Flaschen wurden anschließend folgenden Tests unterzogen:
- Liniensimulation, mit und ohne Wasch- und Füllvorgänge
- Testbefüllungen

Geprüft wurden jeweils die Innendruckfestigkeit und die Verkratzungsneigung auf der Außenfläche.

In verschiedenen Testserien wurden zunächst Schichten aus dem erfindungsgemäßen Beschichtungsmaterial auf Flaschen mit einer vorgelagerten Standard-Heißendvergütung getestet, d.h. als Ersatz für eine bisherige Kaltendvergütung.

Im zweiten Schritt wurden Schichten aus dem erfindungsgemäßen Beschichtungsmaterial direkt auf völlig unvorbehandelten Flaschen getestet, d.h. als gleichzeitiger Ersatz für Heiß- und für Kaltendvergütung.

### Testserie 1

- Verwendetes Schichtmaterial
   o Schicht 1: bestehend aus Komponenten bzw. Verbindungen A7 / B2 / B5 / C19 + Epoxypolymer Araldit GH-260
   o Schicht 1: bestehend aus Komponenten bzw. Verbindungen A7 / B2 / B5 / B6 / C19 + Epoxypolymer Araldit GH-260
- Schichtauftrag durch Sprühen, Schichthärtung 2 h / 160 °C auf
- Flaschenmaterial: heißend vergütet
- Bestimmung der Innendruckfestigkeit (Internal Pressure Resistance - IPR)
   o nach 1 Zyklus Liniensimulation für Einwegflaschen (One Way - OW)
   o nach 1 Zyklus Waschen + Liniensimulation

Als Ergebnis ergibt sich bei beiden Schichtsystemen eine deutlich höhere Innendruckfestigkeit der mit einer Beschichtung aus dem erfindungsgemäßen Beschichtungsmaterial versehenen Flaschen nach der Liniensimulation und im Vergleich deutlich geringeren Festigkeitsverlust gegenüber frisch beschichteten Flaschen im Vergleich zu konventionellen Beschichtungen. Dies wird auch durch das Balkendiagramm in Fig. 2 verdeutlicht, in welchem die Ergebnisse graphisch veranschaulicht sind. Die weißen Balken (jeweils links) stehen hierbei für die konventionelle Beschichtung und die schwarzen Balken (jeweils rechts) für die Beschichtung aus dem erfindungsgemäßen Beschichtungsmaterial. Hierbei ist die Innendruckfestigkeit (IPR) in bar angegeben.
- Bestimmung der Verkratzungsempfindlichkeit ("Scuffing") nach einigen Zyklen der Liniensimulation.

Als Ergebnis ergibt sich bei Flaschen mit einer Beschichtung aus dem erfindungsgemäßen Beschichtungsmaterial eine deutlich niedrigere Kratzempfindlichkeit, die erst ab 20 Zyklen sichtbare Spuren liefert, während bei konventionellen Beschichtungen schon nach 5 Zyklen die ersten Verschleißspuren auftreten.

### Testserie 2

- Verwendetes Schichtmaterial
   o Schicht 1: bestehend aus Komponenten bzw. Verbindungen A7 / B2 / B5 / C19 + Epoxypolymer Araldit GH-260
- Schichtauftrag durch Sprühen, Schichthärtung 2 h / 160 °C auf
- Es wurde überprüft, ob mit einer Teilbeschichtung am Flaschenkörper eine ähnliche Schutzwirkung zu erzielen ist.
- Flaschenmaterial: heißend vergütet
- Bestimmung der Innendruckfestigkeit (Internal Pressure Resistance - IPR)
   o nach 1 Zyklus Liniensimulation
   o Vergleich von teilbeschichteten mit ganz beschichteten Flaschen

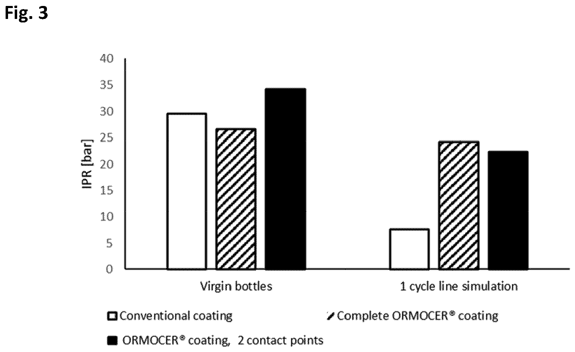

Als Ergebnis ergibt sich bei teilbeschichteten Flaschen eine ähnliche Innendruckfestigkeit wie bei voll-beschichteten Flaschen, wobei die Festigkeit in beiden Fällen deutlich höher ist als bei konventioneller Beschichtung. Dies wird auch durch das Balkendiagramm in Fig. 3 verdeutlicht, in welchem die Ergebnisse graphisch veranschaulicht sind. Die weißen Balken (jeweils links) stehen hierbei für die konventionelle Beschichtung, die schwarzen Balken (jeweils rechts) für die teilweise Beschichtung mit der Beschichtung aus dem erfindungsgemäßen Beschichtungsmaterial und die schraffierten Balken (jeweils in der Mitte) für die vollständige Beschichtung mit der Beschichtung aus dem erfindungsgemäßen Beschichtungsmaterial. Hierbei ist die Innendruckfestigkeit (IPR) in bar angegeben.

### Testserie 3

- Verwendetes Schichtmaterial
   o Schicht 1: bestehend aus Komponenten bzw. Verbindungen A7 / B2 / B5 / C19 + Epoxypolymer Araldit GH-260
- Schichtauftrag durch Sprühen, Schichthärtung 2 h / 160 °C auf unbehandelten Flaschen
- Flaschenmaterial: ohne jegliche Vorbehandlung, nur mit Beschichtung aus erfindungsgemäßen Beschichtungsmaterial
- Bestimmung der Innendruckfestigkeit (Internal Pressure Resistance - IPR)
- Innendruckfestigkeit mit aus erfindungsgemäßen Beschichtungsmaterial bestehender Beschichtung als 1-Schichtsystem, d.h. gleichzeitiger Ersatz der Kalt- und Heißendvergütung nach 20 Füllvorgängen: 20 bar Vergleichs- und Literaturwerte der Innendruckfestigkeit, unbeschichtet (ohne Heißend-, Kaltendvergütung): 2-3 bar
   Normwerte für Flaschen mit Heiß- und Kaltendvergütung: 4-6 bar

Das Gesamtergebnis belegt, dass Schichten, welche das erfindungsgemäße Beschichtungsmaterial umfassen, eine effiziente Schutz- und Verstärkungswirkung bei Behälterglas aufweisen, die deutlich über die von üblichen Heiß- und Kaltendvergütungen hinausgeht.

Die Ergebnisse belegen weiterhin, dass mit einer das erfindungsgemäße Beschichtungsmaterial enthaltenden Schicht gleichzeitig die übliche Heiß- und die Kaltendvergütung mit einem Schichtauftrag ersetzt werden kann, ohne Einbußen bei der mechanischen Schutzwirkung und unter Vermeidung der mit der üblichen Heißendvergütung einhergehenden Arbeitsschutz- und Umweltproblematik der eingesetzten und freigesetzten Stoffe. Dieses gilt sowohl für teilbeschichtete als auch voll-beschichtete Flaschen.

## Patentansprüche

1. Beschichtungsmaterial für Glassubstrate, umfassend mindestens ein anorganisch-organisches Hybridpolymer, welches herstellbar ist durch Vernetzung mindestens einer vernetzbaren Vorstufe des mindestens einen anorganisch-organischen Hybridpolymers, wobei die mindestens eine vernetzbare Vorstufe des mindestens einen anorganisch-organischen Hybridpolymers herstellbar ist durch Reaktion mehrerer Komponenten bestehend aus mindestens einer Komponente A, mindestens einer Komponente B, mindestens einer Komponente C und mindestens einem Epoxypolymer,
wobei die mindestens eine Komponente A ausgewählt ist aus der Gruppe bestehend aus Metallalkoholaten, die peralkoxyliert sein können oder mindestens einen ein- oder zweizähnigen Liganden aufweisen können, und Mischungen hiervon,
wobei die mindestens eine Komponente B ausgewählt ist aus Verbindungen gemäß der folgenden Formeln (B-I) bis (B-V) 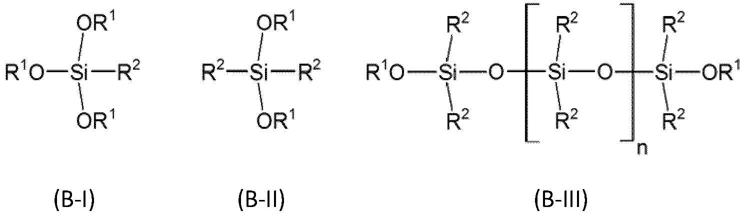 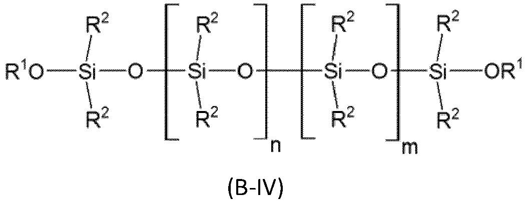 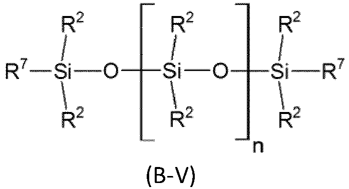
und Mischungen aus diesen Verbindungen,
wobei die mindestens eine Komponente C ausgewählt ist aus Verbindungen gemäß den folgenden Formeln (C-I) bis (C-III), 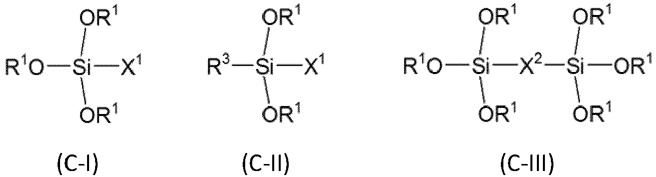
und Mischungen aus diesen Verbindungen, wobei
R¹ bei jedem Auftreten gleich oder verschieden ist und ausgewählt ist aus der Gruppe bestehend aus Wasserstoff, Methyl, Ethyl, *n-*Propyl, iso-Propyl, n-Butyl, iso-Butyl, sec-Butyl und tert-Butyl,
R² bei jedem Auftreten gleich oder verschieden ist und ein Rest ist, der ausgewählt ist aus der Gruppe bestehend aus Alkyl-Resten, welche einfach, mehrfach, vollständig oder nicht halogeniert sein können, Aryl-Resten, welche einfach, mehrfach, vollständig oder nicht halogeniert sein können, Arylalkyl-Resten, welche einfach, mehrfach, vollständig oder nicht halogeniert sein können, Alkylaryl-Resten, welche einfach, mehrfach, vollständig oder nicht halogeniert sein können, Aminoalkyl-Resten und Mercaptoalkyl-Resten, wobei der Rest in allen Fällen an einer oder mehreren Stellen durch eine oder mehrere Gruppierungen unterbrochen sein kann, die ausgewählt sind aus der Gruppe bestehend aus O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ und Kombinationen hiervon,
R³ ausgewählt ist aus der Gruppe bestehend aus Methyl, Ethyl, *n-*Propyl, *iso*-Propyl, *n*-Butyl, *iso*-Butyl, *sec*-Butyl und *tert*-Butyl,
R⁷ bei jedem Auftreten gleich oder verschieden ist und ein Trialkoxysilylalkyl-Rest ist, welcher an einer oder mehreren Stellen durch eine oder mehrere Gruppierungen unterbrochen sein kann, die ausgewählt sind aus der Gruppe bestehend aus NR₁, C(O), C(O)NR¹, NR¹C(O), NR¹C(O)NR¹ und Kombinationen hiervon,
X¹ bei jedem Auftreten gleich oder verschieden ist und ein Rest ist, der mindestens eine C=C-Doppelbindung und/oder mindestens eine Epoxid-Gruppe aufweist,
X² eine verbrückende Gruppierung ist, die mindestens eine C=C-Doppelbindung und/oder mindestens eine Epoxid-Gruppe aufweist,
m eine Zahl von 0 bis 25 ist, und
n eine Zahl von 0 bis 25 ist.

2. Beschichtungsmaterial gemäß dem vorhergehenden Anspruch, **dadurch gekennzeichnet, dass** die mindestens eine Komponente B und/oder die mindestens eine Komponente C mindestens eine an Si gebundene Hydroxylgruppe aufweist.

3. Beschichtungsmaterial gemäß einem der vorhergehenden Anspruche, **dadurch gekennzeichnet, dass** die Metallalkoholalte der Komponente A ausgewählt sind aus Metallalkoholaten gemäß einer der folgenden Formeln (A-I) bis (A-IV) 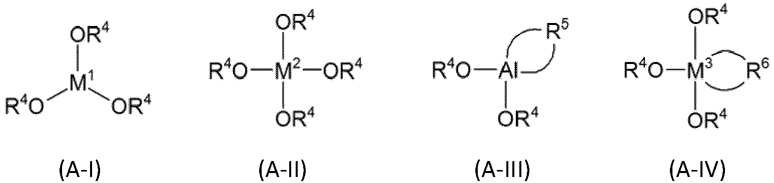 und Mischungen aus diesen Metallalkoholaten, wobei
M¹ ausgewählt ist aus der Gruppe bestehend aus dreiwertigen Hauptgruppenelementen und dreiwertigen Übergangsmetallen, wobei M¹ vorzugsweise Al ist,
M² ausgewählt ist aus der Gruppe bestehend aus Ti und Zr,
M³ ausgewählt ist aus der Gruppe bestehend aus Al, Ti und Zr,
R⁴ bei jedem Auftreten gleich oder verschieden ist und ausgewählt ist aus der Gruppe bestehend aus Methyl, Ethyl, *n*-Propyl, *iso-*Propyl, *n*-Butyl, *iso*-Butyl, *sec*-Butyl und *tert*-Butyl,
R⁵ ein Chelatligand ist, der über zwei O-Atome an Al gebunden ist, wobei der Chelatligand vorzugsweise Acetylaceton oder Acetessigsäureethylester ist,
R⁶ eine organische Säure mit mindestens einer Carboxylgruppe ist, welche über beide O-Atome einer ihrer Carboxylgruppen an M³ gebunden ist, wobei die organische Säure vorzugsweise ausgewählt ist aus der Gruppe bestehend aus Essigsäure, Propionsäure, Methacrylsäure, Acrylsäure, Benzoesäure und Milchsäure.

4. Beschichtungsmaterial gemäß einem der vorhergehenden Ansprüche, **dadurch gekennzeichnet, dass** die mindestens eine C=C-Doppelbindung des Restes X¹ und/oder die mindestens eine C=C-Doppelbindung des Restes X² Bestandteil einer Acrylat- oder Methacrylat-Gruppe ist.

5. Beschichtungsmaterial gemäß einem der vorhergehenden Ansprüche, **dadurch gekennzeichnet, dass** die mindestens eine Komponente A ausgewählt ist aus den folgenden Verbindungen A4 bis A8 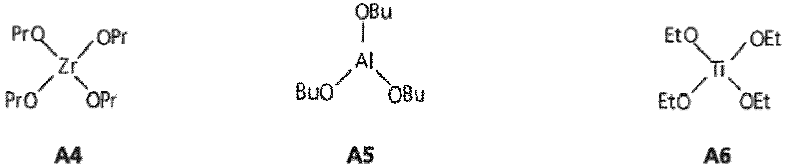 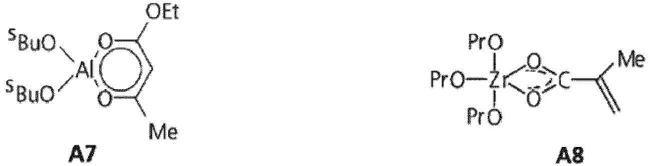 und Mischungen aus diesen Verbindungen.

6. Beschichtungsmaterial gemäß einem der vorhergehenden Ansprüche, **dadurch gekennzeichnet, dass** die mindestens eine Komponente B ausgewählt ist aus den folgenden Verbindungen B1 bis B19 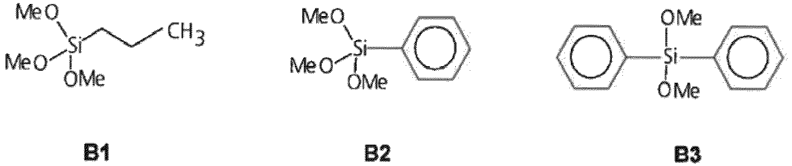 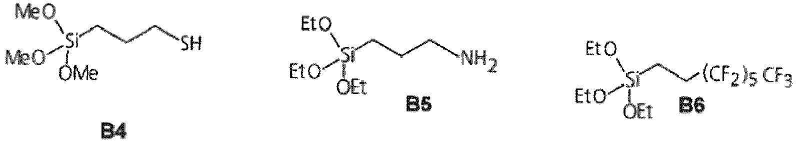 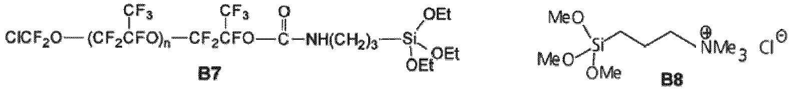 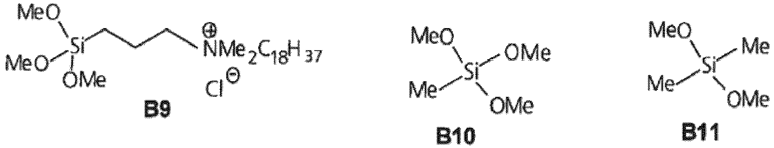 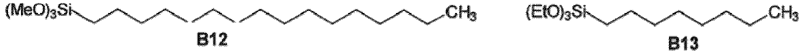 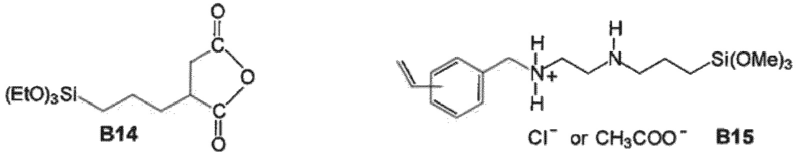 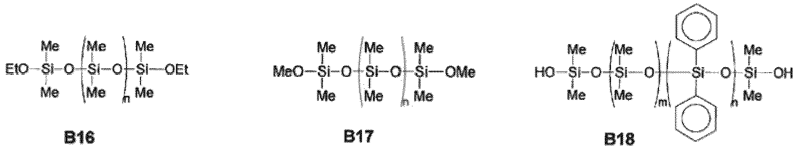 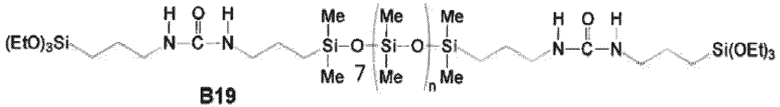 und Mischungen aus diesen Verbindungen.

7. Beschichtungsmaterial gemäß einem der vorhergehenden Ansprüche, **dadurch gekennzeichnet, dass** die mindestens eine Komponente C ausgewählt ist aus den folgenden Verbindungen C1 bis C20 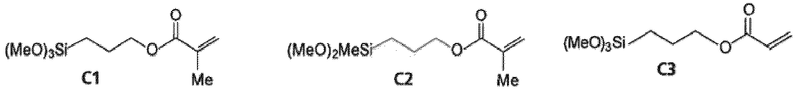 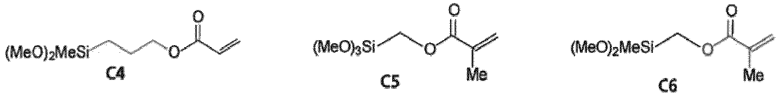 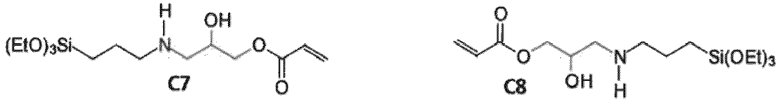 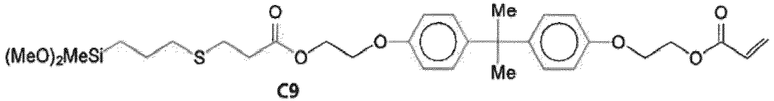 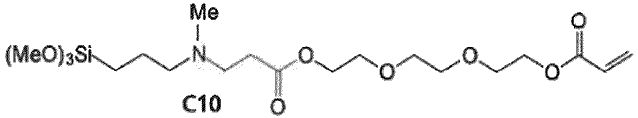 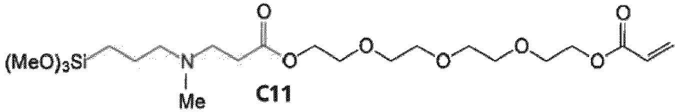 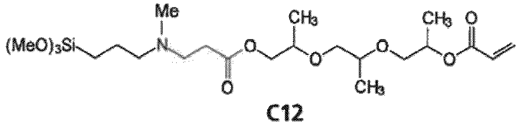 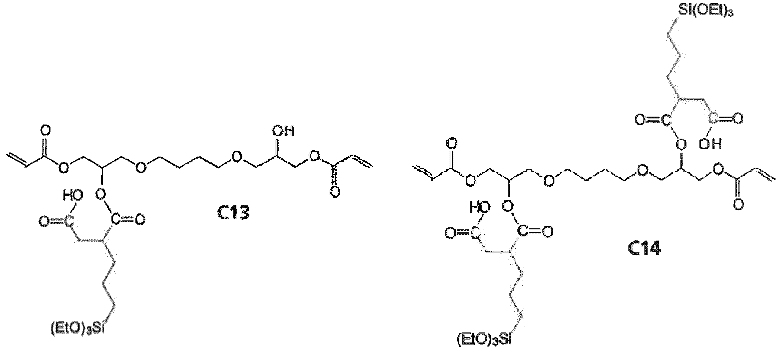 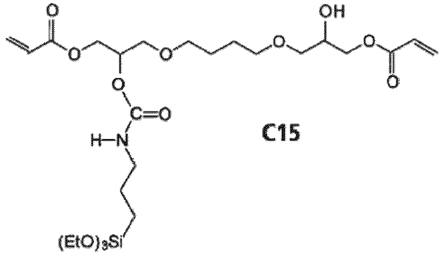 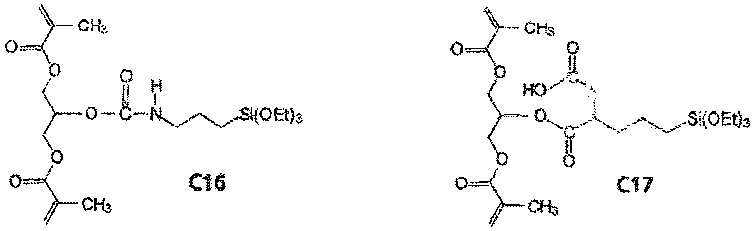 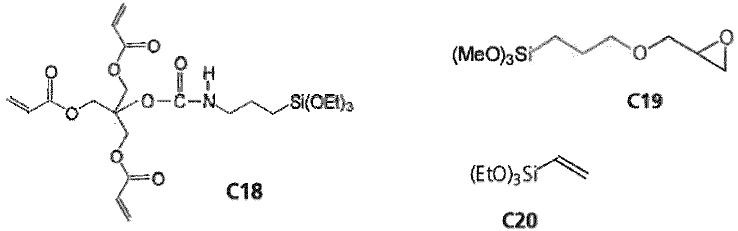 und Mischungen aus diesen Verbindungen.

8. Beschichtungsmaterial gemäß einem der vorhergehenden Ansprüche, **dadurch gekennzeichnet, dass** die mehreren Komponenten aus den folgenden Komponenten A7, B2, B5 und C19, 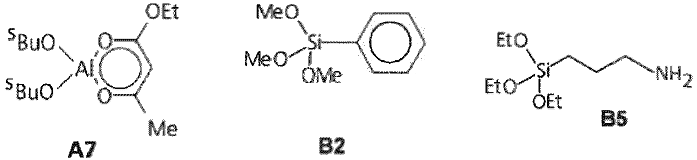 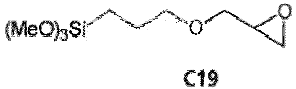 sowie einem Epoxypolymer und optional der folgenden Komponente B6 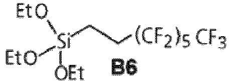 bestehen.

9. Beschichtungsmaterial gemäß einem der vorhergehenden Ansprüche, **dadurch gekennzeichnet, dass** die Reaktion, durch welche die vernetzbare Vorstufe herstellbar ist, ein Sol-Gel-Prozess ist.

10. Beschichtetes Glassubstrat, umfassend ein Glassubstrat, welches mit einem Beschichtungsmaterial gemäß einem der vorhergehenden Ansprüche beschichtet ist.

11. Beschichtetes Glassubstrat gemäß Anspruch 10, **dadurch gekennzeichnet, dass** es sich bei dem Glassubstrat um Behälterglas, vorzugsweise um eine Glasflasche, handelt.

12. Verfahren zur Herstellung eines Beschichtungsmaterials für Glassubstrate nach einem der Ansprüche 1 bis 9, bei welchem
a) mindestens eine vernetzbare Vorstufe mindestens eines anorganisch-organischen Hybridpolymers hergestellt wird, indem eine Mischung bestehend aus mindestens einer Komponente A, mindestens einer Komponente B, mindestens einer Komponente C und mindestens einem Epoxypolymer einem Sol-Gel-Prozess unterzogen wird,
wobei die mindestens eine Komponente A ausgewählt ist aus der Gruppe bestehend aus Metallalkoholaten, die peralkoxyliert sein können oder mindestens einen ein- oder zweizähnigen Liganden aufweisen können, und Mischungen hiervon,
wobei die mindestens eine Komponente B ausgewählt ist aus Verbindungen gemäß der folgenden Formeln (B-I) bis (B-V) 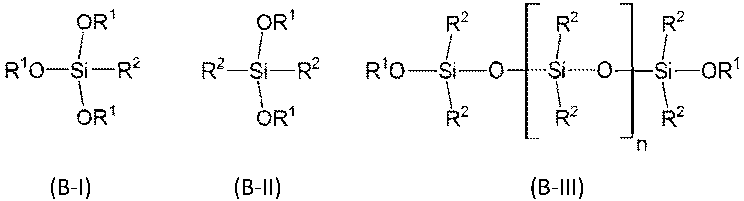 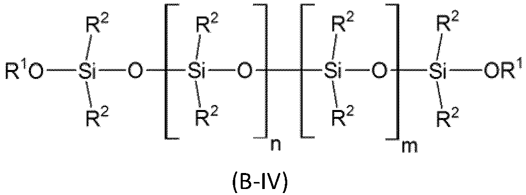 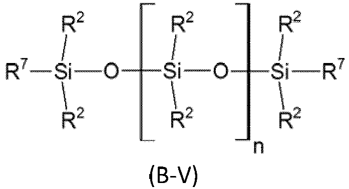 und Mischungen aus diesen Verbindungen,
wobei die mindestens eine Komponente C ausgewählt ist aus Verbindungen gemäß den folgenden Formeln (C-I) bis (C-III) 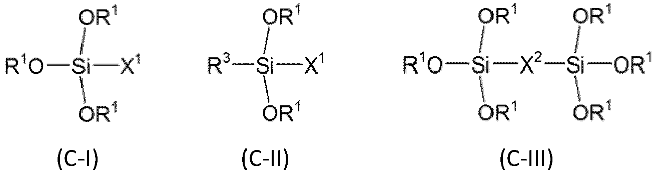
und Mischungen aus diesen Verbindungen, wobei
R¹ bei jedem Auftreten gleich oder verschieden ist und ausgewählt ist aus der Gruppe bestehend aus Wasserstoff, Methyl, Ethyl, *n-*Propyl, *iso*-Propyl, *n*-Butyl, *iso*-Butyl, *sec*-Butyl und *tert*-Butyl,
R² bei jedem Auftreten gleich oder verschieden ist und ein Rest ist, der ausgewählt ist aus der Gruppe bestehend aus Alkyl-Resten, welche einfach, mehrfach, vollständig oder nicht halogeniert sein können, Aryl-Resten, welche einfach, mehrfach, vollständig oder nicht halogeniert sein können, Arylalkyl-Resten, welche einfach, mehrfach, vollständig oder nicht halogeniert sein können, Alkylaryl-Resten, welche einfach, mehrfach, vollständig oder nicht halogeniert sein können, Aminoalkyl-Resten und Mercaptoalkyl-Resten, wobei der Rest in allen Fällen an einer oder mehreren Stellen durch eine oder mehrere Gruppierungen unterbrochen sein kann, die ausgewählt sind aus der Gruppe bestehend aus O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ und Kombinationen hiervon,
R³ ausgewählt ist aus der Gruppe bestehend aus Methyl, Ethyl, *n-*Propyl, *iso*-Propyl, *n*-Butyl, *iso*-Butyl, *sec*-Butyl und *tert*-Butyl,
R⁷ bei jedem Auftreten gleich oder verschieden ist und ein Trialkoxysilylalkyl-Rest ist, welcher an einer oder mehreren Stellen durch eine oder mehrere Gruppierungen unterbrochen sein kann, die ausgewählt sind aus der Gruppe bestehend aus NR₁, C(O), C(O)NR¹, NR¹C(O), NR¹C(O)NR¹ und Kombinationen hiervon,
X¹ bei jedem Auftreten gleich oder verschieden ist und ein Rest ist, der mindestens eine C=C-Doppelbindung und/oder mindestens eine Epoxid-Gruppe aufweist,
X² eine verbrückende Gruppierung ist, die mindestens eine C=C-Doppelbindung und/oder mindestens eine Epoxid-Gruppe aufweist,
m eine Zahl von 0 bis 25 ist, und
n eine Zahl von 0 bis 25 ist
und
b) die vernetzbare Vorstufe zum mindestens einen anorganisch-organischen Hybridpolymer vernetzt wird.

13. Verfahren gemäß Anspruch 12, **dadurch gekennzeichnet, dass** die Vernetzung der mindestens einen vernetzbaren Vorstufe zum mindestens einen anorganisch-organischen Hybridpolymer in Schritt b)
• durch Wärmebehandlung, vorzugsweise bei einer Temperatur im Bereich von 20 °C bis 160 °C, und/oder
• durch Bestrahlung mit elektromagnetischer Strahlung mit einer Wellenlänge im Bereich von 1 nm bis 1 mm, vorzugsweise durch UV-Bestrahlung,
erfolgt.

14. Verfahren zur Herstellung eines beschichteten Glassubstrats nach Anspruch 10 oder 11, wobei das Verfahren die Schritte a) und b) nach einem der Ansprüche 12 oder 13 umfasst, und wobei nach Schritt a) ein Glassubstrat mit der mindestens einen vernetzbaren Vorstufe oder dem Beschichtungsmaterial beschichtet wird, wobei die Beschichtung vorzugsweise vor Schritt b) erfolgt.

15. Verfahren gemäß Anspruch 14, **dadurch gekennzeichnet, dass** die Beschichtung mit einem Verfahren erfolgt, welches ausgewählt ist aus der Gruppe bestehend aus Sprühverfahren, Tauchen, Fluten, Aufrakeln, Walzenauftrag, Rotationsbeschichtung und Kombinationen hiervon.

## Claims

1. A coating material for glass substrates, comprising at least one inorganic-organic hybrid polymer, which is producible by cross-linking at least one cross-linkable precursor of the at least one inorganic-organic hybrid polymer, the at least one cross-linkable precursor of the at least one inorganic-organic hybrid polymer being producible by reacting a plurality of components consisting of at least one component A, at least one component B, at least one component C and at least one epoxy polymer,
the at least one component A being selected from the group consisting of metal alcoholates, which may be peralkoxylated or can include at least one monodentate or bidentate ligand, and mixtures thereof,
the at least one component B being selected from compounds according to the following formulas (B-I) to (B-V), 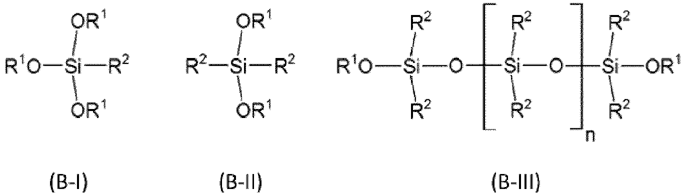 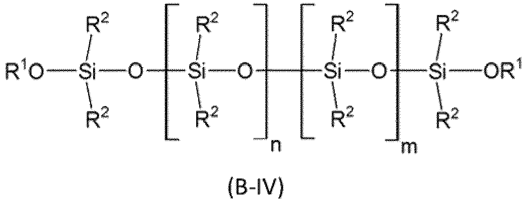 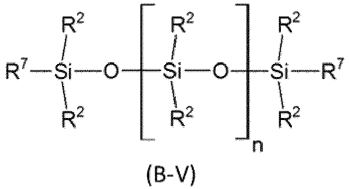
and mixtures of these compounds,
the at least one component C being selected from compounds according to the following formulas (C-I) to (C-III), 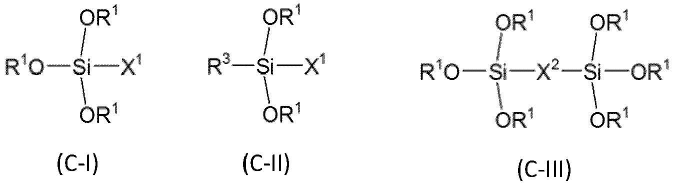 and mixtures of these compounds,
with
R¹ being the same or different every time it occurs and being selected from the group consisting of hydrogen, methyl, ethyl, *n-*propyl, *iso*-propyl, *n*-butyl, *iso*-butyl, *sec*-butyl and *tert*-butyl;
R² being the same or different every time it occurs and being a radical selected from the group consisting of alkyl radicals, which can be singly, multiply, completely or not halogenated, aryl radicals, which can be singly, multiply, completely or not halogenated, arylalkyl radicals, which can be singly, multiply, completely or not halogenated, alkylaryl radicals, which can be singly, multiply, completely or not halogenated, aminoalkyl radicals and mercaptoalkyl radicals, it being possible for the radical in all cases to be interrupted at one or more positions by one or more groupings selected from the group consisting of O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ and combinations thereof;
R³ being selected from the group consisting of methyl, ethyl, *n-*propyl, *iso*-propyl, *n*-butyl, *iso*-butyl, *sec*-butyl and *tert*-butyl;
R⁷ being the same or different every time it occurs and being a trialkoxysilylalkyl radical, which can be interrupted at one or more positions by one or more groupings selected from the group consisting of NR₁, C(O), C(O)NR¹, NR¹C(O), NR¹C(O)NR¹ and combinations thereof;
X¹ being the same or different every time it occurs and being a radical that includes at least one C=C double bond and/or at least one epoxy group;
X² being a bridging group that includes at least one C=C double bond and/or at least one epoxy group;
m being a number from 0 to 25; and
n being a number from 0 to 25.

2. The coating material according to the preceding claim, **characterized in that** the at least one component B and/or the at least one component C comprises at least one hydroxy group that is bound to Si.

3. The coating material according to any one of the preceding claims, **characterized in that** the metal alcoholates of component A are selected from metal alcoholates according to one of the following formulas (A-I) to (A-IV) 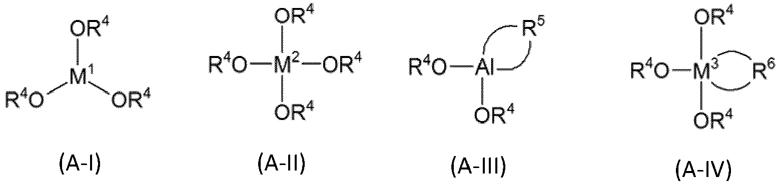 and mixtures of these metal alcoholates, with
M¹ being selected from the group consisting of trivalent main group elements and trivalent transition metals, M¹ preferably being Al;
M² being selected from the group consisting of Ti and Zr;
M³ being selected from the group consisting of Al, Ti and Zr;
R⁴ being the same or different every time it occurs and being selected from the group consisting of methyl, ethyl, *n*-propyl, *iso-*propyl, *n*-butyl, *iso*-butyl, *sec*-butyl and *tert*-butyl;
R⁵ being a chelating ligand that is bound to Al via two O-atoms, the chelating ligand preferably being acetylacetone or ethyl acetoacetate;
R⁶ being an organic acid including at least one carboxyl group that is bound to M³ via the two O-atoms of one of the carboxyl groups thereof, the organic acid preferably being selected from the group consisting acetic acid, propionic acid, methacrylic acid, acrylic acid, benzoic acid and lactic acid.

4. The coating material according to any one of the preceding claims, **characterized in that** the at least one C=C double bond of the radical X¹ and/or the at least one C=C double bond of the radical X² are part of an acrylate or methacrylate group.

5. The coating material according to any one of the preceding claims, **characterized in that** the at least one component A is selected from the following compounds A4 to A8 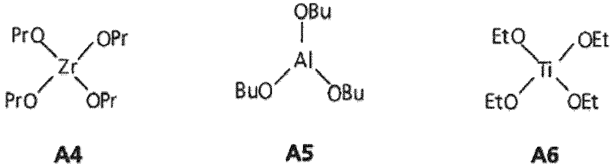 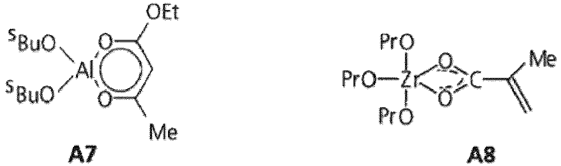 and mixtures of these compounds.

6. The coating material according to any one of the preceding claims, **characterized in that** the at least one component B is selected from the following compounds B1 to B19 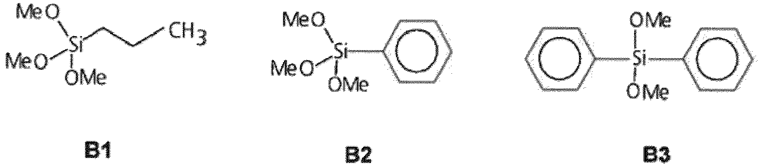 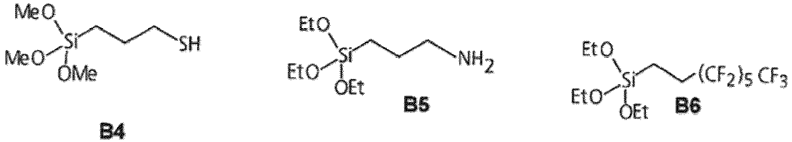 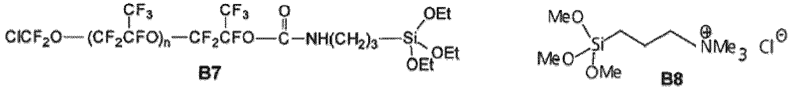 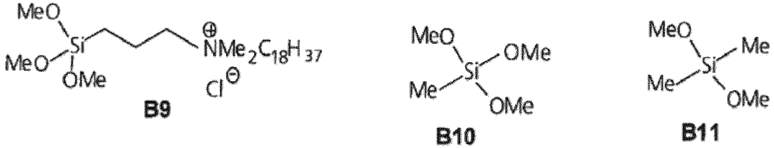 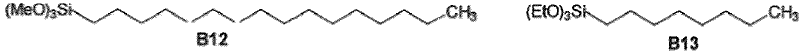 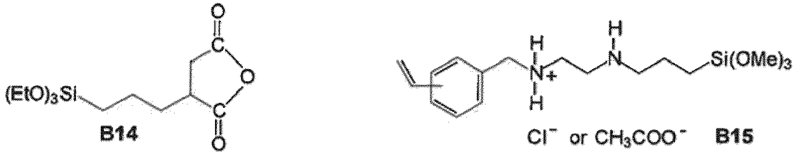 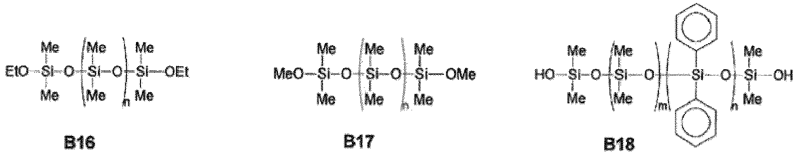 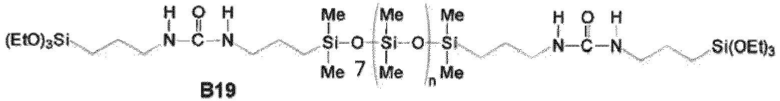 and mixtures of these compounds.

7. The coating material according to any one of the preceding claims, **characterized in that** the at least one component C is selected from the following compounds C1 to C20 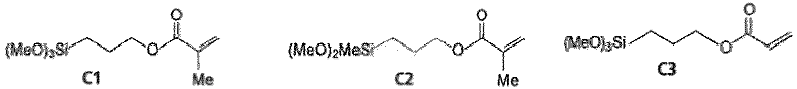 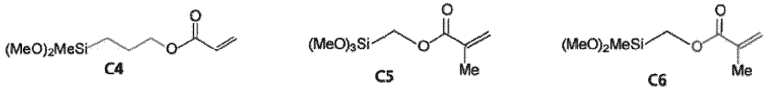 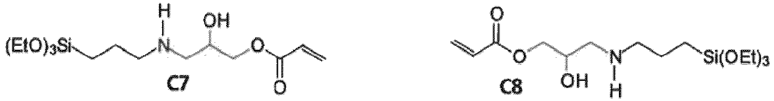 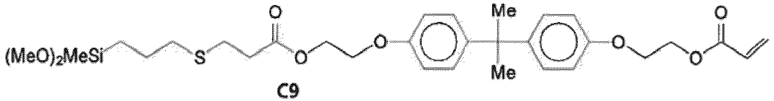 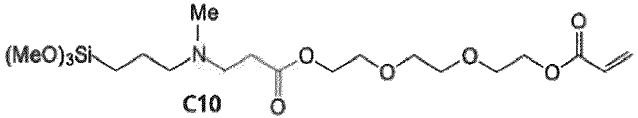 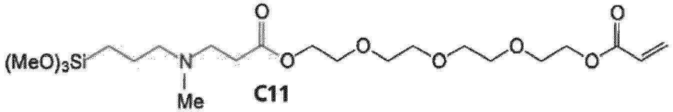 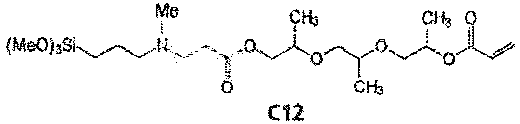 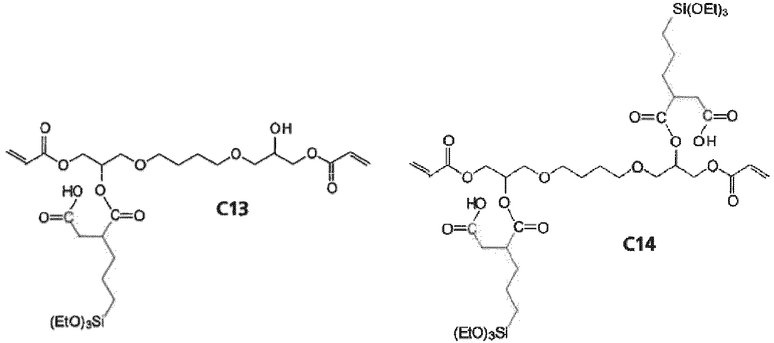 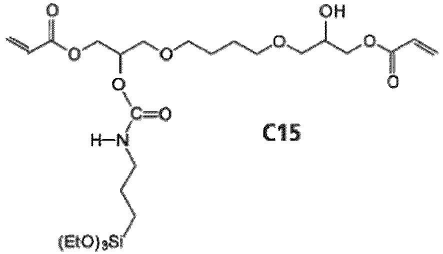 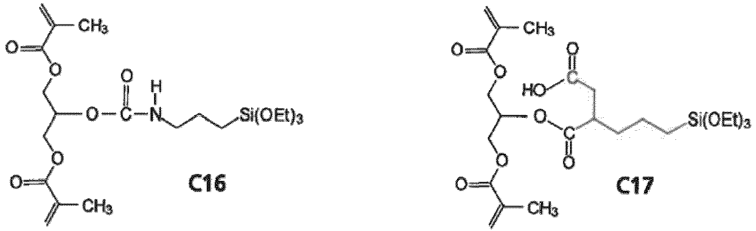 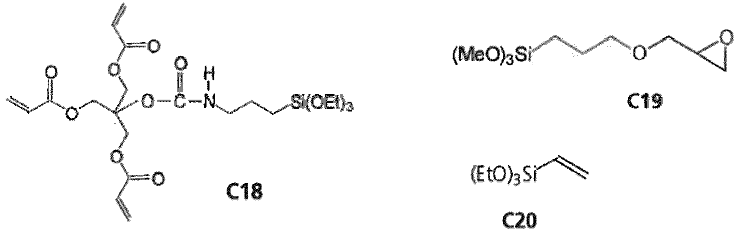 and mixtures of these compounds.

8. The coating material according to any one of the preceding claims, **characterized in that** the plurality of components consists of the following components A7, B2, B5 and C19, 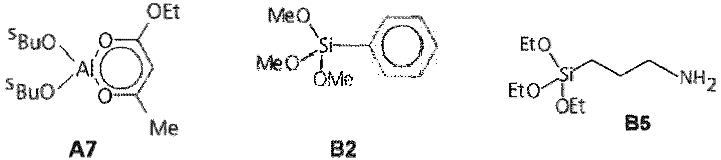 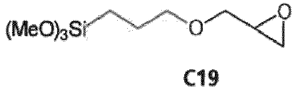 as well as an epoxy polymer, and optionally the following component B6.

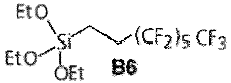

9. The coating material according to any one of the preceding claims, **characterized in that** the reaction by which the cross-linkable precursor is producible is a sol-gel process.

10. A coated glass substrate, comprising a glass substrate that is coated with a coating material according to any one of the preceding claims.

11. The coated glass substrate according to claim 10, **characterized in that** the glass substrate is a container glass, and preferably a glass bottle.

12. A method for producing a coating material for glass substrates according to any one of claims 1 to 9, wherein:
a) at least one cross-linkable precursor of at least one inorganic-organic hybrid polymer is produced by subjecting a mixture consisting of at least one component A, at least one component B, at least one component C and at least one epoxy polymer to a sol-gel process,
the at least one component A being selected from the group consisting of metal alcoholates, which may be peralkoxylated or can include at least one monodentate or bidentate ligand, and mixtures thereof,
the at least one component B being selected from compounds according to the following formulas (B-I) to (B-V), 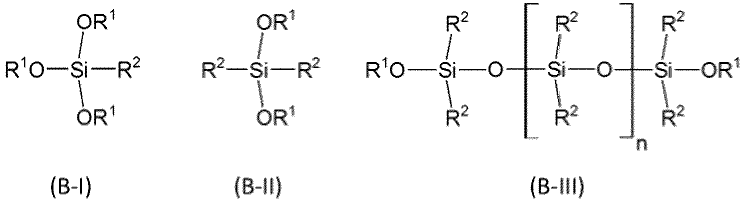 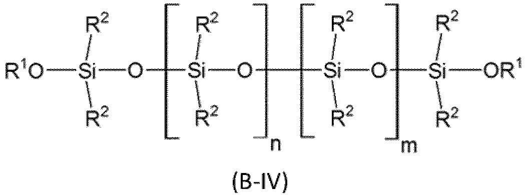 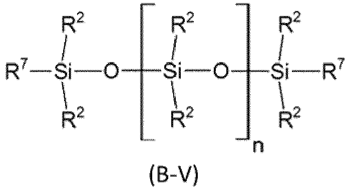
and mixtures of these compounds,
the at least one component C being selected from compounds according to the following formulas (C-I) to (C-III) 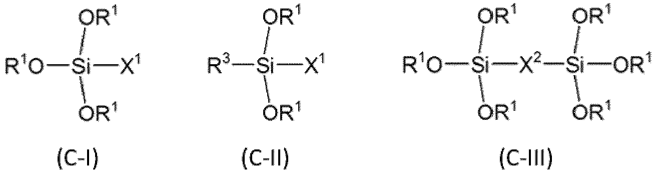
and mixtures of these compounds, with
R¹ being the same or different every time it occurs and being selected from the group consisting of hydrogen, methyl, ethyl, *n-*propyl, *iso*-propyl, *n*-butyl, *iso*-butyl, *sec*-butyl and *tert*-butyl;
R² being the same or different every time it occurs and being a radical selected from the group consisting of alkyl radicals, which can be singly, multiply, completely or not halogenated, aryl radicals, which can be singly, multiply, completely or not halogenated, arylalkyl radicals, which can be singly, multiply, completely or not halogenated, alkylaryl radicals, which can be singly, multiply, completely or not halogenated, aminoalkyl radicals and mercaptoalkyl radicals, it being possible for the radical in all cases to be interrupted at one or more positions by one or more groupings selected from the group consisting of O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ and combinations thereof;
R³ being selected from the group consisting of methyl, ethyl, *n-*propyl, *iso*-propyl, *n*-butyl, *iso*-butyl, *sec*-butyl and *tert*-butyl;
R⁷ being the same or different every time it occurs and being a trialkoxysilylalkyl radical, which can be interrupted at one or more positions by one or more groupings selected from the group consisting of NR₁, C(O), C(O)NR¹, NR¹C(O), NR¹C(O)NR¹ and combinations thereof;
X¹ being the same or different every time it occurs and being a radical that includes at least one C=C double bond and/or at least one epoxy group;
X² being a bridging group that includes at least one C=C double bond and/or at least one epoxy group;
m being a number from 0 to 25; and
n being a number from 0 to 25 and
b) the cross-linkable precursor is cross-linked to give at least one inorganic-organic hybrid polymer.

13. The method according to claim 12, **characterized in that** the cross-linking of the least one cross-linkable precursor to give at least one inorganic-organic hybrid polymer in step b) is carried out
• by heat treating, preferably at a temperature in a range from 20°C to 160°C, and/or
• by irradiation with electromagnetic radiation having a wavelength in the range from 1 nm to 1 mm, preferably by UV irradiation.

14. The method for producing a coated glass substrate according to claim 10 or 11, wherein the method comprises the steps a) and b) according to either claim 12 or 13, and wherein, after step a), a glass substrate is coated with the at least one cross-linkable precursor or the coating agent, the coating preferably being carried out prior to step b).

15. The method according to claim 14, **characterized in that** the coating is carried out using a method selected from the group consisting of a spraying method, dipping, flooding, doctoring knife application, roller application, spin coating, and combinations thereof.

## Revendications

1. Matériau de revêtement pour des substrats en verre, comprenant au moins un polymère hybride inorganique-organique, lequel peut être préparé par réticulation d'au moins un précurseur réticulable du au moins un polymère hybride inorganique-organique, dans lequel le au moins un précurseur réticulable du au moins un polymère hybride inorganique-organique peut être préparé par réaction de plusieurs composants constitués par au moins un composant A, au moins un composant B, au moins un composant C et au moins un polymère époxy,
dans lequel le au moins un composant A est choisi dans le groupe constitué par les alcoolates métalliques, qui peuvent être peralcoxylés ou peuvent présenter au moins un ligand mono- ou bidenté, et leurs mélanges,
dans lequel le au moins un composant B est choisi parmi les composés selon les formules (B-I) à (B-V) suivantes 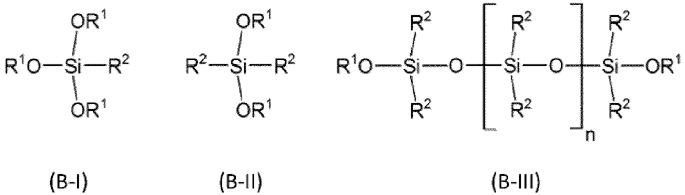 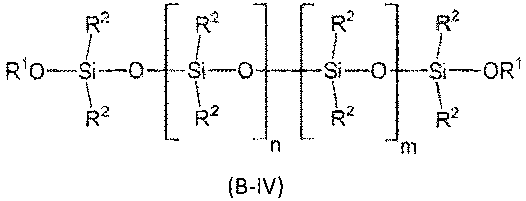 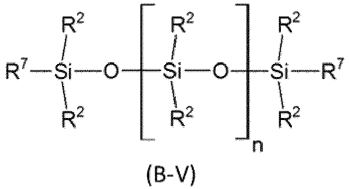
et des mélanges de ces composés,
dans lequel le au moins un composant C est choisi parmi les composés représentés selon les formules (C-I) à (C-III) suivantes, 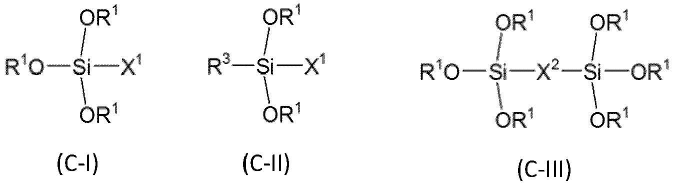 et des mélanges de ces composés,
dans lequel
R¹ est identique ou différent à chaque occurrence et est choisi dans le groupe constitué par l'hydrogène, le méthyle, l'éthyle, le *n*-propyle, l'*iso*-propyle, le *n*-butyle, l'*iso*-butyle, le *sec*-butyle et le *tert*-butyle,
R² est identique ou différent à chaque occurrence et est un radical qui est choisi dans le groupe constitué par les radicaux alkyle, lesquels peuvent être mono-, poly-, totalement ou non halogénés, les radicaux aryle, lesquels peuvent être mono-, poly-, totalement ou non halogénés, les radicaux arylalkyle, lesquels peuvent être mono-, poly-, totalement ou non halogénés, les radicaux alkylaryle, lesquels peuvent être mono-, poly-, totalement ou non halogénés, les radicaux aminoalkyle et les radicaux mercaptoalkyle, dans lequel le radical peut dans tous les cas en un ou plusieurs endroits être interrompu par un ou plusieurs groupements choisis dans le groupe constitué par O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ et des combinaisons de ceux-ci,
R³ est choisi dans le groupe constitué par le méthyle, l'éthyle, le *n-*propyle, l'*iso*-propyle, le n-butyle, l'*iso*-butyle, le sec-butyle et le tert-butyle,
R⁷ est identique ou différent à chaque occurrence et est un radical trialcoxysilylalkyle, lequel peut être interrompu en un ou plusieurs endroits par un ou plusieurs groupements, qui sont choisis dans le groupe constitué par NR₁, C(O), C(O)NR¹, NR¹C(O), NR¹C(O)NR¹ et des combinaisons de ceux-ci,
X¹ est identique ou différent à chaque occurrence et est un radical qui présente au moins une double liaison C=C et/ou au moins un groupe époxyde,
X² est un groupement de pontage qui présente au moins une double liaison C=C et/ou au moins un groupe époxyde,
m est un nombre de 0 à 25, et
n est un nombre de 0 à 25.

2. Matériau de revêtement selon la revendication précédente, **caractérisé en ce que** le au moins un composant B et/ou le au moins un composant C présente au moins un groupe hydroxyle lié à Si.

3. Matériau de revêtement selon l'une quelconque des revendications précédentes, **caractérisé en ce que** les alcoolates métalliques du composant A sont choisis parmi les alcoolates métalliques selon l'une des formules (A-I) à (A-IV) suivantes 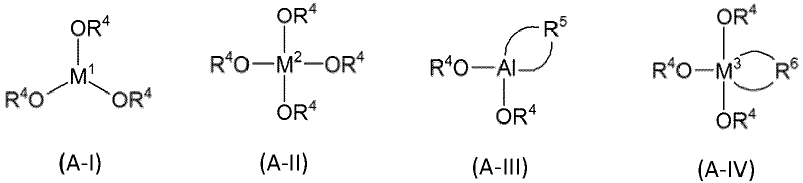 et des mélanges de ces alcoolats métalliques, dans lequel
M¹ est choisi dans le groupe constitué par les éléments trivalents du groupe principal et les métaux de transition trivalents, dans lequel M¹ est de préférence AI,
M² est sélectionné dans le groupe constitué par Ti et Zr,
M³ est choisi dans le groupe constitué par AI, Ti et Zr,
R⁴ est identique ou différent à chaque occurrence et est choisi dans le groupe constitué par le méthyle, l'éthyle, le n-propyle, l'*iso*-propyle, le *n*-butyle, l'*iso*-butyle, le *sec*-butyle et le *tert*-butyle,
R⁵ est un ligand chélatant, qui est lié à Al par deux atomes O, dans lequel le ligand chélatant est de préférence l'acétylacétone ou l'acétoacétate d'éthyle,
R⁶ est un acide organique avec au moins un groupe carboxyle, lequel est lié à M³ par les deux atomes O de l'un de ses groupes carboxyle, dans lequel l'acide organique est de préférence choisi dans le groupe constitué par l'acide acétique, l'acide propionique, l'acide méthacrylique, l'acide acrylique, l'acide benzoïque et l'acide lactique.

4. Matériau de revêtement selon l'une quelconque des revendications précédentes, **caractérisé en ce que** la au moins une double liaison C=C du radical X¹ et/ou la au moins une double liaison C=C du radical X² fait partie d'un groupe acrylate ou méthacrylate.

5. Matériau de revêtement selon l'une quelconque des revendications précédentes, **caractérisé en ce que** le au moins un composant A est choisi parmi les composés A4 à A8 suivants 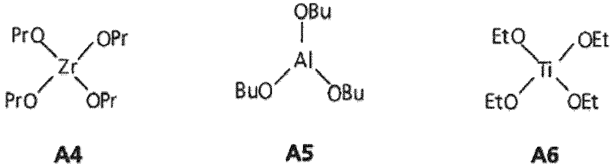 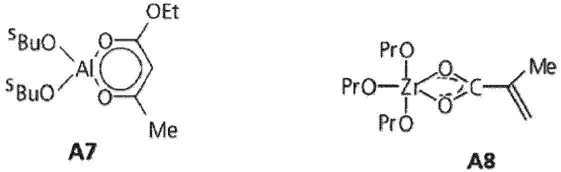 et des mélanges de ces composés.

6. Matériau de revêtement selon l'une quelconque des revendications précédentes, **caractérisé en ce que** le au moins un composant B est choisi parmi les composés B1 à B19 suivants 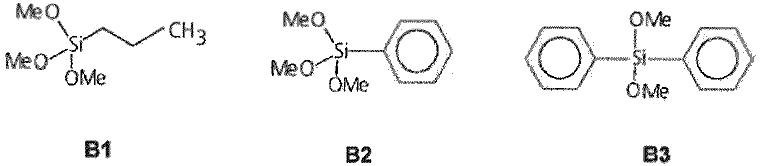 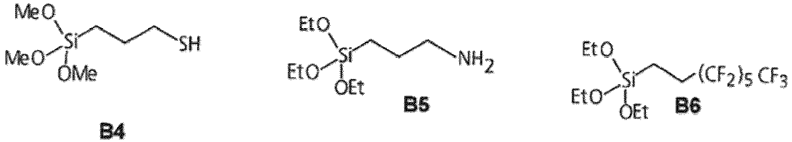 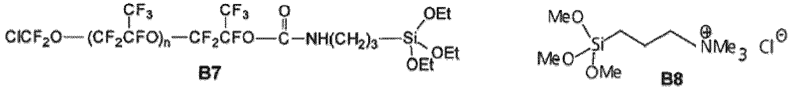 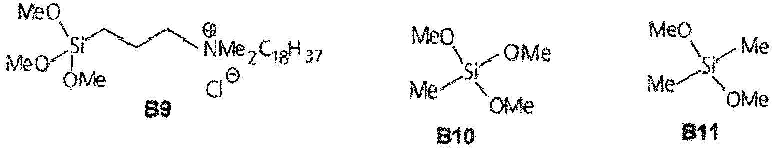 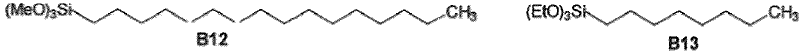 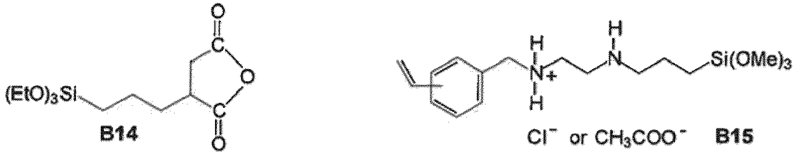 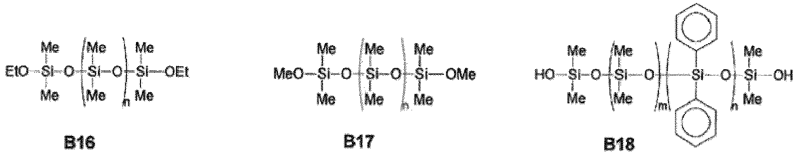 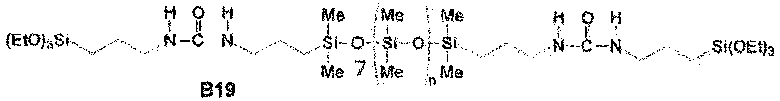 et des mélanges de ces composés.

7. Matériau de revêtement selon l'une quelconque des revendications précédentes, **caractérisé en ce que** le au moins un composant C est choisi parmi les composés C1 à C20 suivants 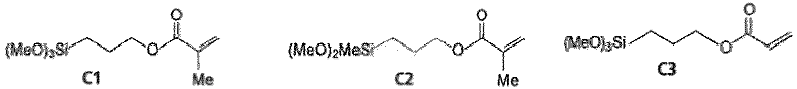 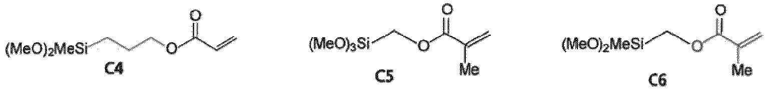 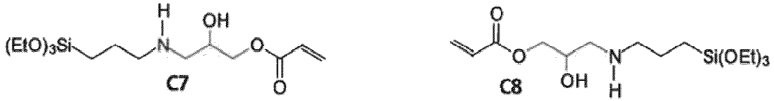 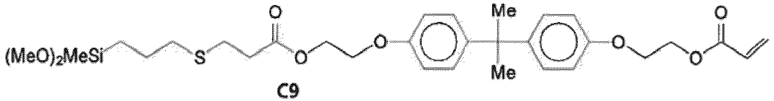 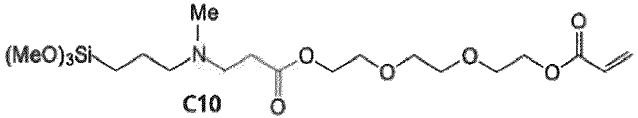 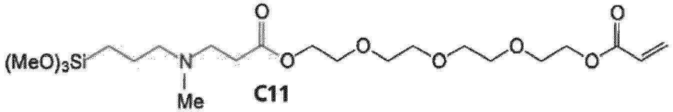 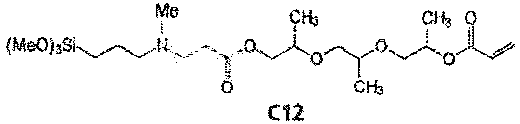 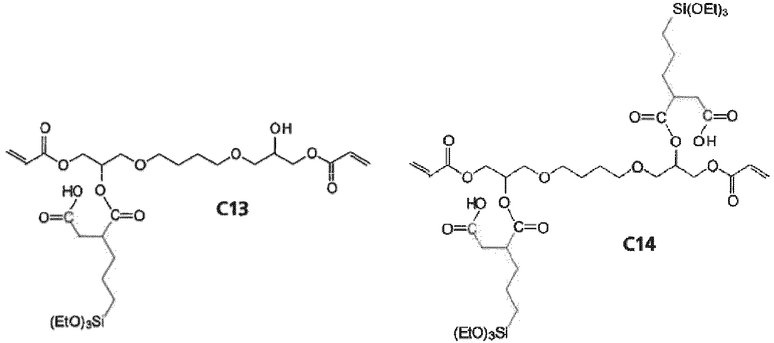 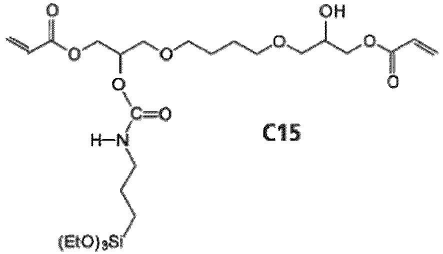 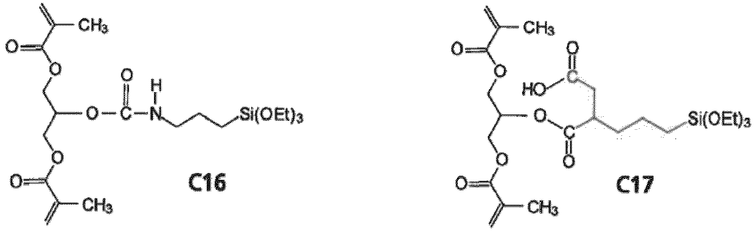 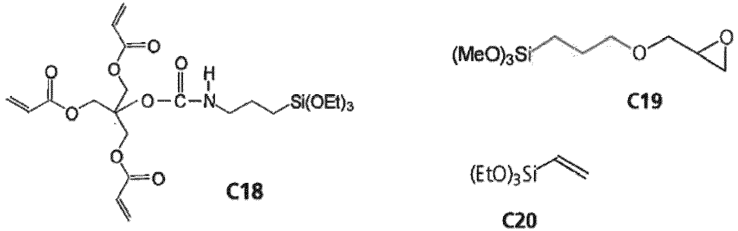 et des mélanges de ces composés.

8. Matériau de revêtement selon l'une quelconque des revendications précédentes, **caractérisé en ce que** les multiples composants sont constitués par les composants A7, B2, B5 et C19 suivants, 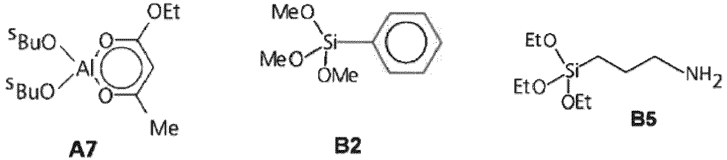 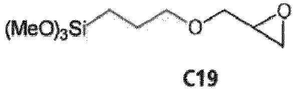 ainsi qu'un polymère époxy et, éventuellement, le composant B6 suivant

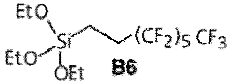

9. Matériau de revêtement selon l'une quelconque des revendications précédentes, **caractérisé en ce que** la réaction par laquelle le précurseur réticulable peut être préparé est un processus sol-gel.

10. Substrat en verre revêtu, comprenant un substrat en verre, lequel est revêtu d'un matériau de revêtement selon l'une quelconque des revendications précédentes.

11. Substrat en verre revêtu selon la revendication 10, **caractérisé en ce que** le substrat en verre est un verre de récipient, de préférence une bouteille en verre.

12. Procédé pour la fabrication d'un matériau de revêtement pour des substrats en verre selon l'une quelconque des revendications 1 à 9, selon lequel
a) au moins un précurseur réticulable d'au moins un polymère hybride inorganique-organique est préparé en soumettant un mélange constitué par au moins un composant A, au moins un composant B, au moins un composant C et au moins un polymère époxyde à un processus sol-gel,
dans lequel le au moins un composant A est choisi dans le groupe constitué par les alcoolates métalliques, qui peuvent être peralcoxylés ou peuvent présenter au moins un ligand mono- ou bidenté, et des mélanges de ceux-ci,
dans lequel le au moins un composant B est choisi parmi les composés selon les formules (B-I) à (B-V) suivantes 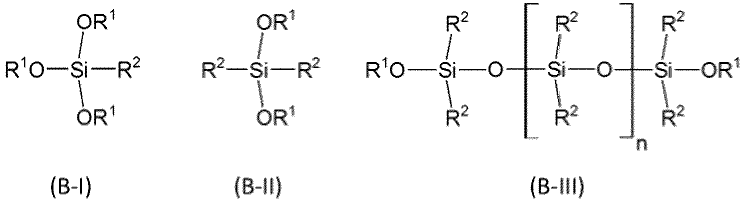 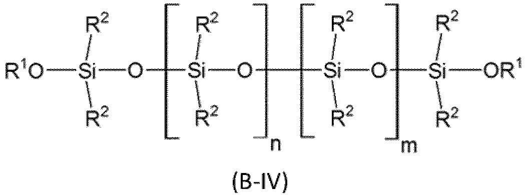 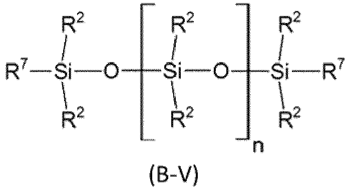 et des mélanges de ces composés,
dans lequel le au moins un composant C est choisi parmi les composés selon les formules (C-I) à (C-III) suivantes 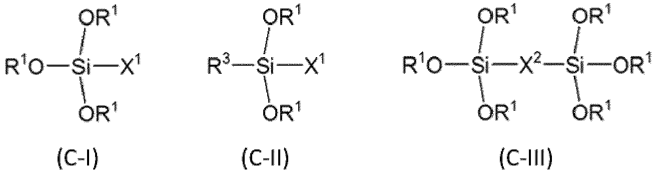
et des mélanges de ces composés, dans lequel
R¹ est identique ou différent à chaque occurrence et est choisi dans le groupe constitué par l'hydrogène, le méthyle, l'éthyle, le *n*-propyle, l'*iso*-propyle, le *n*-butyle, l'*iso*-butyle, le *sec*-butyle et le *tert*-butyle,
R² est identique ou différent à chaque occurrence et est un radical, qui est choisi dans le groupe constitué par les radicaux alkyle, lesquels peuvent être mono-, poly-, totalement ou non halogénés, les radicaux aryle, lesquels peuvent être mono-, poly-, totalement ou non halogénés, les radicaux arylalkyle, lesquels peuvent être mono-, poly-, totalement ou non halogénés, les radicaux alkylaryle, lesquels peuvent être mono-, poly-, totalement ou non halogénés, les radicaux aminoalkyle et les radicaux mercaptoalkyle, dans lequel le radical peut dans tous les cas en un ou plusieurs endroits être interrompu par un ou plusieurs groupements, qui sont choisis dans le groupe constitué par O, S, NR₁, NR¹₂⁺Cl⁻, NR¹₂⁺CH₃COO⁻, C(O), C(O)O, C(O)OC(O), C(O)NR¹, NR¹C(O), NR¹C(O)NR¹ et des combinaisons de ceux-ci,
R³ est choisi dans le groupe constitué par le méthyle, l'éthyle, le *n-*propyle, l'*iso*-propyle, le *n*-butyle, l'*iso*-butyle, le *sec*-butyle et le *tert*-butyle,
R⁷ est identique ou différent à chaque occurrence et est un radical trialcoxysilylalkyle, lequel peut être interrompu en un ou plusieurs endroits par un ou plusieurs groupements, qui sont choisis dans le groupe constitué par NR₁, C(O), C(O)NR¹, NR¹C(O), NR¹C(O)NR¹ et des combinaisons de ceux-ci,
X¹ est identique ou différent à chaque occurrence et est un radical qui présente au moins une double liaison C=C et/ou au moins un groupe époxyde,
X² est un groupement de pontage qui présente au moins une double liaison C=C et/ou au moins un groupe époxyde,
m est un nombre de 0 à 25, et
n est un nombre de 0 à 25
et
b) le précurseur réticulable est réticulé en au moins un polymère hybride inorganique-organique.

13. Procédé selon la revendication 12, **caractérisé en ce que** la réticulation du au moins un précurseur réticulable en le au moins un polymère hybride inorganique-organique s'effectue dans l'étape b)
• par traitement thermique, de préférence à une température dans la plage de 20 °C à 160 °C, et/ou
• par irradiation au moyen d'un rayonnement électromagnétique avec une longueur d'onde dans la plage de 1 nm à 1 mm, de préférence au moyen d'un rayonnement UV.

14. Procédé de fabrication d'un substrat en verre revêtu selon la revendication 10 ou 11, dans lequel le procédé comprend les étapes a) et b) selon l'une quelconque des revendications 12 ou 13, et dans lequel, après l'étape a), un substrat en verre est revêtu du au moins un précurseur réticulable ou du matériau de revêtement, dans lequel le revêtement s'effectue de préférence avant l'étape b).

15. Procédé selon la revendication 14, **caractérisé en ce que** le revêtement s'effectue avec un procédé, lequel est choisi dans le groupe constitué par la pulvérisation, le trempage, le noyage, le raclage, l'application au rouleau, le revêtement par rotation et des combinaisons de ceux-ci.
